# EUROPEAN PATENT APPLICATION

(11) **EP 4 564 583 A1**
(43) Date of publication of application: **04.06.2025**
(21) Application number: 22967569.9
(22) Date of filing: 07.12.2022
(51) Int. Cl.: H01M 50/533, H01M 50/536, H01M 50/107, H01M 50/152

(54) **BATTERY CELL AND ASSEMBLY METHOD THEREFOR, BATTERY, ELECTRICAL DEVICE, AND ASSEMBLY DEVICE**

(71) Applicant: Contemporary Amperex Technology Co., Limited, Fujian 352100 (CN)
(72) Inventor: ZHU, Guanghao, Ningde City Fujian 352100 (CN); CHAI, Zhisheng, Ningde City Fujian 352100 (CN); GU, Hui, Ningde City Fujian 352100 (CN); JIN, Haizu, Ningde City Fujian 352100 (CN)
(74) Representative: Ran, Handong
(86) International application number: PCT/CN2022/137323
(87) International publication number: WO 2024/119409

(57) **Abstract**

The present application discloses a battery cell and an assembly method therefor, a battery, an electrical device, and an assembly device. The battery cell comprises an electrode component, a casing, an end cap component, and a current collection part. The electrode component comprises a first tab. The casing is used for containing the electrode component, and the casing is provided with an opening. The end cap component covers the opening and is provided with an electrode lead-out portion. The current collection part comprises a tab connection area and an end cover connection area, the tab connection area is adapted to be connected to the first tab, and the end cover connection area is welded to the inner side of the electrode lead-out portion and forms a first welding portion. The welding depth of the first welding portion formed on the electrode lead-out portion is less than or equal to the thickness of the electrode lead-out portion. **In** this way, the reliability of welding between the end cap component and the current collection part can be improved, and the risk of electrolyte leakage caused by cracks formed by welding can be effectively reduced.

## Description

### TECHNICAL FIELD

The present application relates to the technical field of batteries, and in particular, to a battery cell and an assembling method thereof, a battery, an electrical apparatus, and an assembling assembly.

### BACKGROUND

With the development of battery technologies, battery cells are applied in increasingly more fields and gradually replace traditional fossil energy in the field of automotive power. A battery cell may store chemical energy and controllably converts the chemical energy into electrical energy. After discharging, the battery can activate active substances by charging and continue to be used.

The battery cell often includes an electrode assembly, a current collecting component, a case, and an end cover assembly. The case is capable of accommodating the electrode assembly, and the end cover assembly is capable of covering an opening of the case. When the end cover assembly covers the opening of the case, it is often necessary to electrically connect it to the electrode assembly through the current collecting component. In the existing assembling method of a battery cell, the welding of the end cover assembly and the current collecting component often requires performing penetration welding from outside the end cover assembly. The end cover assembly needs to have a certain structural stability, and its thickness is relatively large. At the same time, in order to save the internal space of the case, the thickness of the current collecting component is relatively small. Therefore, for the external penetration welding, a molten pool needs to pass through the relatively thick end cover assembly and then reach the relatively thin current collecting component, so that it is difficult to control the penetration depth. If the penetration depth is too small, the end cover assembly is not melted enough, which leads to the risk of false welding between the end cover assembly and the current collecting component, easily causing poor connection. If the penetration depth is too large, there is a risk of excessive welding penetration of the end cover assembly and the current collecting component, which may easily lead to incorrect welding between the current collecting component and the electrode assembly or damage to the electrode assembly due to high temperature, and/or may easily lead to the increase of the risk of an electrolyte solution leaking from cracks to the outside of the battery cell due to the overlarge cracks in the welding position of the two.

### SUMMARY OF THE INVENTION

In view of the above problems, the present application provides a battery cell and an assembling method thereof, a battery, an electrical apparatus, and an assembling assembly, which is capable of improving the welding reliability of an end cover assembly and a current collecting component.

In a first aspect, the present application provides a battery cell. The battery cell includes an electrode assembly, a case, an end cover assembly, and a current collecting component. The electrode assembly includes a first tab. The case is used for accommodating the electrode assembly, and the case has an opening. The end cover assembly covers the opening and is provided with an electrode lead-out portion. The current collecting component includes a tab connecting region and an end cover connecting region. The tab connecting region is used for connecting to the first tab. The end cover connecting region is welded to the inner side of the electrode lead-out portion and forms a first welded portion. The penetration depth of the first welded portion formed on the electrode lead-out portion is smaller than or equal to the thickness of the electrode lead-out portion.

In the technical solution of the embodiment of the present application, the first welded portion is formed on the end cover connecting region of the current collecting component, and the penetration depth of the first welded portion formed on the electrode lead-out portion is set to be smaller than or equal to the thickness of the electrode lead-out portion, which can effectively avoid the risk of false welding and excessive welding penetration. Furthermore, when the penetration depth is set to be smaller than the thickness of the electrode lead-out portion, the cracks at the welding position of the two are less likely to extend to an outer surface of the current collecting component, thereby effectively reducing the risk of leakage, being conducive to reducing a defective rate in a battery cell production process, and improving the quality of the battery cell.

In some embodiments, the penetration depth of the first welded portion formed on the electrode lead-out portion is between 1/4 and 3/4 of the thickness of the electrode lead-out portion. Through the above method, sufficient connection strength can be obtained between the electrode lead-out portion and the current collecting component, and a margin is capable of being left for the electrode lead-out portion, thereby reducing the risk of the cracks extending to the outer surface of the end cover assembly.

In some embodiments, a base material of the electrode lead-out portion is different from a base material of the current collecting component, and/or the melting point of the base material of the electrode lead-out portion is greater than the melting point of the base material of the current collecting component. Through the above method, different base materials may be used to meet respective structural characteristics of the electrode lead-out portion and the current collecting component. In addition, the lower melting point of the base material of the current collecting component is beneficial to reducing the welding temperature, while the relatively high melting point of the base material of the electrode lead-out portion can ensure that the electrode lead-out portion is not welded through, thereby reducing the risk of leakage.

In some embodiments, the thermal expansion coefficient of the base material of the electrode lead-out portion is smaller than the thermal expansion coefficient of the base material of the current collecting component. Through the above method, using a base material with a smaller thermal expansion coefficient for the electrode lead-out portion is beneficial to reducing generation of stress-strains and cracks on the electrode lead-out portion, and reducing the risk of leakage.

In some embodiments, the base material of the electrode lead-out portion is steel, and the base material of the current collecting component is copper or aluminum. Through the above method, the base material of the electrode lead-out portion being steel may cause the base of the electrode lead-out portion to have lower thermal expansion coefficient, may also make the battery lead-out portion have good mechanical strength. The melting point of copper or aluminum is lower than that of steel. The base material of the current collecting component being copper or aluminum may cause the current collecting component to be welded more easily. At the same time, copper or aluminum is easier to process and shape.

**In** some embodiments, a welding aid layer is arranged on a surface of the electrode lead-out portion and/or the current collecting component. Through the above method, the use of the welding aid layer is beneficial to improving the welding effect between the current collecting component and the electrode lead-out portion.

**In** some embodiments, the electrode lead-out portion includes a base, the welding aid layer is arranged on the base, and at least part of the first welded portion is located in the base. Through the above method, using a solder mask layer is beneficial to improving the welding effect of the electrode lead-out portion, and the first welded portion extends into the base, which is beneficial to improving the connection strength.

In some embodiments, the first welded portion is arranged not to penetrate the base. Through the above method, the first welded portion being arranged not to penetrate the base is capable of reducing the risk of liquid leakage.

In some embodiments, the welding aid layer includes at least one of nickel or tin. Through the above method, when the base is difficult to weld, arranging nickel or tin on the surface of the base can improve the weldability of the electrode lead-out portion and improve the welding effect.

In some embodiments, the first welded portion is formed from a side of the end cover connecting region away from the electrode lead-out portion and extends into the electrode lead-out portion. Through the above method, welding is performed from the side of the end cover connecting region away from the electrode lead-out portion, which not only facilitates the execution of the welding operation, but also makes it difficult to weld through the electrode lead-out portion.

In some embodiments, the tab connecting region is welded to the first tab and forms a second welded portion. The second welded portion is formed from a side of the tab connecting region away from the first tab and extends into the first tab. Through the above method, welding is performed from the side of the tab connecting region away from the first tab, which is capable of facilitating the execution of the welding operation.

In some embodiments, the current collecting component further includes a transition region connected between the tab connecting region and the end cover connecting region. The transition region is arranged to be capable of being bent relative to the end cover connecting region, and the tab connecting region is arranged to be capable of being bent relative to the transition region. Through the above method, the tab connecting region and the end cover connecting region are connected through the transition region, which is capable of providing assembly redundancy for the tab connecting region and the end cover connecting region and facilitating the execution of the welding operation.

In some embodiments, the current collecting component in a flat state has a first reference direction and a second reference direction arranged along a main surface of the current collecting component and perpendicular to each other. The tab connecting region, the transition region, and the end cover connecting region are arranged sequentially in the first reference direction. A first main surface of the end cover connecting region is attached to the electrode lead-out portion, and is welded to the electrode lead-out portion through the first welded portion formed from a second main surface of the end cover connecting region. Through the above method, the connection area of welding between the electrode lead-out portion and the end cover connecting region is capable of being increased, which facilitates the execution of the welding operation.

In some embodiments, a second main surface of the tab connecting region is attached to the first tab, and is welded to the first tab through the second welded portion formed from a first main surface of the tab connecting region. The first main surface of the tab connecting region and the first main surface of the end cover connecting region are located on the same side of the current collecting component. Through the above method, it is capable of facilitating the execution of the welding operation, and improving the assembly efficiency.

In some embodiments, after the battery cell is assembled, the current collecting component is in an unfolded state between the electrode assembly and the end cover assembly. **In** the unfolded state, the tab connecting region, the transition region, and the end cover connecting region are arranged in a non-overlapping manner in an axial direction of the battery cell. Through the above method, the size occupied by the current collecting component in the axial direction of the battery cell may be reduced, which is beneficial to improving the space utilization of the battery cell.

In some embodiments, the tab connecting region is welded to the first tab and forms the second welded portion, and the current collecting component is arranged to be capable of being in a bent state in an assembling process of the battery cell. Therefore, after one of the first welded portion and the second welded portion is formed, an avoidance is formed between the end cover assembly and the electrode assembly, thereby allowing formation of the other of the first welded portion and the second welded portion. Through the above method, it is capable of facilitating the execution of the welding operation, and improving the assembly efficiency.

In some embodiments, in the bent state, an avoidance is formed between the end cover assembly and the first main surface of the tab connecting region. Through the above method, the end cover assembly and the current collecting component are allowed to be pre-assembled and formed, and then the tab connecting region and the electrode assembly are welded, thereby improving the assembling efficiency.

In some embodiments, the end cover connecting region includes a first sub-end cover connecting region and a second sub-end cover connecting region. The first sub-end cover connecting region is connected to the tab connecting region, and the second sub-end cover connecting region is connected to the first sub-end cover connecting region and is arranged to maintain a gap with the tab connecting region. The first sub-end cover connecting region and the second sub-end cover connecting region are respectively welded to the electrode lead-out portion through the first welded portion. Through the above method, the welding area of the end cover connecting region and the end cover assembly may be increased, which is beneficial to maintaining a stable connection between the current collecting component and the end cover assembly and meeting overcurrent requirements.

In some embodiments, the current collecting component further includes the transition region arranged between the first sub-end cover connecting region and the tab connecting region. The current collecting component in the flat state has the first reference direction and the second reference direction arranged along the main surface of the current collecting component and perpendicular to each other. The tab connecting region, the transition region, and the first sub-end cover connecting region are arranged sequentially in the first reference direction. The second sub-end cover connecting region is located outside the transition region at least in the second reference direction and extends toward the tab connecting region. Certain gaps are maintained between the second sub-end cover connecting region and the transition region as well as the tab connecting region. Through the above method, the connection area between the end cover connecting region and the end cover assembly may be increased, and the space utilization rate may be improved at the same time. Furthermore, there will be no interference formed between the second sub-end cover connecting region and the tab connecting region.

In some embodiments, the second sub-end cover connecting region further extends to be located outside the tab connecting region in the second reference direction. Through the above method, the connection area between the end cover connecting region and the end cover assembly may be increased, and the space utilization rate may be improved at the same time.

In some embodiments, there is one second sub-end cover connecting region. Two ends of the second sub-end cover connecting region are respectively connected to the first sub-end cover connecting region, and are arranged around the transition region and the tab connecting region. Through the above method, the connection area between the end cover connecting region and the end cover assembly is further increased, and at the same time, the balance stability of the connection between the end cover connecting region and the end cover assembly is improved.

In some embodiments, there are two second sub-end cover connecting regions, and they are respectively located at least on two opposite sides of the transition region in the second reference direction. Through the above method, the balance stability of the connection between the end cover connecting region and the end cover assembly may be improved.

In some embodiments, the tab connecting region and the first sub-end cover connecting region are respectively arranged in arch shapes. Through the above method, the tab connecting region and the first sub-end cover connecting region are more easily adapted to arc-shaped edges of the case and/or the end cover assembly, while ensuring overcurrent requirements between the tab connecting region and the end cover connecting region.

In some embodiments, in the flat state of the current collecting component, an outer edge of the tab connecting region and an outer edge of the first sub-end cover connecting region are respectively arranged in arc shapes and are arranged to share the same center. Through the above method, the processing and shaping of the current collecting component is facilitated, and it is easier to adapt to a cylindrical or nearly cylindrical battery cell.

In some embodiments, in the flat state of the current collecting component, the outer edge of the tab connecting region is arranged in an arc shape. There is an included angle between connection lines from two outermost connection points of the first sub-end cover connecting region and the transition region in the second reference direction to the center of the outer edge of the tab connecting region, and the included angle is smaller than a central angle of the outer edge of the tab connecting region. Through the above method, the regional area of the tab connecting region that is capable of being connected to the first tab may be ensured, thereby meeting the overcurrent requirements.

In some embodiments, the central angle of the outer edge of the tab connecting region is 120 degrees to 240 degrees, and the included angle is 80 degrees to 120 degrees. Through the above method, the regional area of the tab connecting region that is capable of being connected to the first tab and the regional area of the end cover connecting region that is capable of being connected to the electrode lead-out portion are capable of being ensured at the same time.

In some embodiments, in the flat state of the current collecting component, the outer edge of the first sub-end cover connecting region and an outer edge of the second sub-end cover connecting region are respectively arranged in arc shapes and are arranged to share the same center with equal radiuses. Through the above method, the processing and shaping of the current collecting component is facilitated, and it is easier to adapt to a cylindrical battery cell or nearly cylindrical battery cell.

In some embodiments, in the flat state of the current collecting component, the outer edge of the second sub-end cover connecting region and an inner edge of the second sub-end cover connecting region are arranged in arc shapes and are arranged to share the same center. A ratio between the radiuses of the outer edge of the second sub-end cover connecting region and the inner edge of the second sub-end cover connecting region is 1.1 to 1.3. Through the above method, the connection area between the second sub-end cover connecting region and the electrode lead-out portion may be increased, while ensuring the overcurrent requirements between the end cover connecting region and the tab connecting region.

In some embodiments, in the flat state of the current collecting component, the outer edge of the first sub-end cover connecting region and an outer edge of the transition region are respectively arranged in arc shapes and are arranged to share the same center. Through the above method, it is easier to process and shape the current collecting component.

In some embodiments, in the flat state of the current collecting component, the outer edge of the tab connecting region is arranged in an arc shape, and the current collecting component further has a reference circle having a radius being a connection line from the outermost connection point between the first sub-end cover connecting region and the transition region in the second reference direction to the center of the outer edge of the tab connecting region. The outer edge of the transition region is located inside the reference circle and is arranged at an interval from the reference circle. Through the above method, sufficient hollow space is formed between the transition region and the second sub-end cover connecting region, thereby reducing the material consumption of the current collecting component and improving the infiltration effect of an electrolyte solution on the electrode assembly.

In some embodiments, the interval width between the outer edge of the transition region and the reference circle in the second reference direction gradually becomes larger in a direction from the first sub-end cover connecting region to the tab connecting region. Through the above method, sufficient hollow space is formed between the transition region and the second sub-end cover connecting region, thereby reducing the amount of material used in the current collecting component and improving the infiltration effect of the electrolyte solution on the electrode assembly.

In some embodiments, the transition region is arranged in a trapezoidal shape, and the width of the transition region in the second reference direction gradually becomes larger in the direction from the first sub-end cover connecting region to the tab connecting region. Through the above method, sufficient hollow space is formed between the transition region and the second sub-end cover connecting region, thereby facilitating the processing and shaping of the outer edge of the transition region.

In some embodiments, in the flat state of the current collecting component, when the outer edge of the tab connecting region is projected toward the end cover connecting region in the first reference direction, the projection of the outermost point of the outer edge of the tab connecting region in the second reference direction is located outside the inner edge of the second sub-end cover connecting region. Through the above method, the regional area of the tab connecting region that is capable of being connected to the first tab may be ensured, thereby meeting the overcurrent requirements.

In some embodiments, the outer edge of the tab connecting region and the inner edge of the second sub-end cover connecting region are respectively arranged in arc shapes and share the same center, and the radius of the outer edge of the tab connecting region is larger than the radius of the inner edge of the second sub-end cover connecting region. Through the above method, the regional area of the tab connecting region that is capable of being connected to the first tab can be ensured, which facilitates the processing and shaping of the current collecting component at the same time.

In some embodiments, the current collecting component is provided with a first trace line and a second trace line in the second reference direction. The first trace line is arranged to allow the tab connecting region to be bent relative to the transition region along the first trace line. The second trace line is arranged to allow the first sub-end cover connecting region to be bent relative to the transition region along the second trace line. Through the above method, it is easy to bend the current collecting component.

In some embodiments, in the flat state, there is a first distance between the first trace line and the second trace line in the first reference direction, and there is a second distance from the second trace line to the outer edge of the first sub-end cover connecting region in the first reference direction. The first distance is greater than a maximum value of the second distance, so that in the bent state, the outer edge of the end cover assembly maintains a predetermined interval from a plane where the first main surface of the tab connecting region is located. Through the above method, interference between the end cover assembly and the electrode assembly is avoided, which facilitates the welding operation.

In some embodiments, a ratio between the minimum overcurrent area S of the transition region and the battery capacity C of the battery cell is greater than or equal to 0.15 mm2/Ah, and the minimum overcurrent area of the transition region is a product of the minimum width of the transition region in the second reference direction and the thickness of the transition region. Through the above method, the overcurrent capacity of the transition region may be made to meet current transmission requirements of the electrode assembly and the end cover assembly.

In some embodiments, the electrode assembly includes an electrode main body arranged in a cylindrical shape, the outer edge of the tab connecting region is arranged in an arc shape, and a ratio of the radius of the outer edge of the tab connecting region to the radius of the electrode assembly is greater than or equal to 0.8. Through the above method, the regional area of the tab connecting region that is capable of being connected to the first tab may be ensured, thereby meeting the overcurrent requirements.

In some embodiments, the current collecting component is further provided with a hollow portion. Through the above method, the amount of material used in the current collecting component may be reduced, and the infiltration effect of the electrolyte solution on the electrode assembly may be improved.

In some embodiments, the outer edge of the tab connecting region is arranged in an arc shape and the hollow portion is located at the position of the center of the outer edge of the tab connecting region, or the hollow portion is entirely located within the tab connecting region. Through the above method, the hollow portion located at the center of the outer edge of the tab connecting region can further enhance the infiltration effect of the electrolyte solution on the electrode assembly. When the hollow portion is entirely located in the tab connecting region, the hollow portion may be used as an observation window and may be used for assisting positioning.

In some embodiments, the end cover assembly includes an end cover, the electrode lead-out portion includes at least a part of region on the end cover, and the end cover covers the opening. Through the above method, using the end cover as the electrode lead-out portion can simplify the structural complexity of the end cover assembly.

In some embodiments, the electrode lead-out portion includes an annular boss of the end cover protruding toward the electrode assembly, the end cover connecting region is welded to a top surface of the annular boss, and the outer edge of the tab connecting region overlaps the top surface of the annular boss. Through the above method, the annular boss is used to support the tab connecting region, which can reduce deformation and deflection of the current collecting component and improve the structural stability of the battery cell.

In some embodiments, the outer edge of the tab connecting region is arranged in an arc shape, and the radius of the outer edge of the tab connecting region is greater than an inner edge radius of the annular boss and smaller than an outer edge radius of the annular boss. Through the above method, while the annular boss is used to support the tab connecting region, interference between the outer edge of the tab connecting region and the case is avoided.

In some embodiments, the case is electrically connected to the end cover, the case includes a bottom wall arranged opposite to the end cover, and the bottom wall is provided with an electrode terminal protruding from the bottom wall. The electrode assembly further includes a second tab with a polarity opposite to that of the first tab. The second tab is located on a side of the electrode assembly facing the electrode terminal, and the second tab is electrically connected to the electrode terminal. Through the above method, using the case and the electrode terminal provided on the bottom wall of the case as positive and negative electrodes of the battery cell can simplify the assembling complexity of the battery cell and facilitate the connection between the battery cell and an external device.

In a second aspect, the present application provides a battery, including the battery cell in the above embodiment.

In a third aspect, the present application provides an electrical apparatus, including the battery in the above embodiment.

In a fourth aspect, the present application provides an assembling assembly for a battery cell. The assembling assembly includes an end cover assembly and a current collecting component. The end cover assembly is provided with an electrode lead-out portion. The current collecting component in a flat state has a first reference direction and a second reference direction arranged along a main surface of the current collecting component and perpendicular to each other. The current collecting component includes a tab connecting region, a transition region, and an end cover connecting region arranged sequentially in the first reference direction. A first main surface of the end cover connecting region is attached to the electrode lead-out portion, and is welded to the battery lead-out portion through a first welded portion formed from a second main surface of the end cover connecting region. The penetration depth of the first welded portion formed on the electrode lead-out portion is smaller than or equal to the thickness of the electrode lead-out portion. Through the above method, the first welded portion is formed on the end cover connecting region of the current collecting component, and the penetration depth of the first welded portion formed on the electrode lead-out portion is set to be smaller than or equal to the thickness of the electrode lead-out portion, which can effectively avoid the risk of false welding and excessive welding penetration. Furthermore, when the penetration depth is set to be smaller than the thickness of the electrode lead-out portion, the cracks at the welding position of the two are less likely to extend to an outer surface of the current collecting component, thereby effectively reducing the risk of leakage, being conducive to reducing a defective rate in a battery cell production process, and improving the quality of the battery cell.

In some embodiments, the transition region is arranged to be capable of being bent relative to the end cover connecting region, and the tab connecting region is arranged to be capable of being bent relative to the transition region, so that the current collecting component is in a bent state. **In** the bent state, an avoidance is formed between the end cover and the first main surface of the tab connecting region such that when the second main surface of the tab connecting region is attached to the first tab of the electrode assembly, the tab connecting region is allowed to be welded to the first tab through a second welded portion formed on the first main surface of the tab connecting region. The first main surface of the tab connecting region and the first main surface of the end cover connecting region are located on the same side of the current collecting component. Through the above method, the execution of the welding operation is facilitated.

In some embodiments, the current collecting component is arranged to be capable of being bent into a bent state in advance and maintaining the bent state without being affected by an external force. Through the above method, the current collecting component may be directly bent into a required shape before or after assembling of the end cover assembly and the current collecting component is completed, which is beneficial to improving subsequent production efficiency.

In some embodiments, the current collecting component is arranged to be capable of being unfolded into an unfolded state when the tab connecting region is welded to the first tab and the end cover assembly is placed to cover the case accommodating the electrode assembly. In the unfolded state, the tab connecting region, the transition region, and the end cover connecting region are arranged in a non-overlapping manner in an axial direction of the battery cell. Through the above method, the size occupied by the current collecting component in the axial direction of the battery cell may be reduced, which is beneficial to improving the space utilization of the battery cell.

In some embodiments, the end cover connecting region includes a first sub-end cover connecting region connected to the transition region and a second sub-end cover connecting region connected to the first sub-end cover connecting region. In a flat state, the second sub-end cover connecting region is located at least outside the transition region in the second reference direction, and extends toward the tab connecting region. Certain gaps are maintained between the second sub-end cover connecting region and the transition region as well as the tab connecting region. The first sub-end cover connecting region and the second sub-end cover connecting region are respectively welded to the electrode lead-out portion through the first welded portion. Through the above method, the connection area between the end cover connecting region and the end cover assembly may be increased, and the space utilization rate may be improved at the same time. Furthermore, there will be no interference formed between the second sub-end cover connecting region and the tab connecting region.

In some embodiments, the second sub-end cover connecting region further extends to be located outside the tab connecting region in the second reference direction. Through the above method, the connection area between the end cover connecting region and the end cover assembly may be further increased, and the space utilization rate may be improved at the same time.

In some embodiments, there is one second sub-end cover connecting region. Two ends of the second sub-end cover connecting region are respectively connected to the first sub-end cover connecting region, and are arranged around the transition region and the tab connecting region. Through the above method, the connection area between the end cover connecting region and the end cover assembly is further increased, and at the same time, the balance stability of the connection between the end cover connecting region and the end cover assembly is improved.

In some embodiments, there are two second sub-end cover connecting regions, and they are respectively located at least on two opposite sides of the transition region in the second reference direction. Through the above method, the connection area between the end cover connecting region and the end cover assembly is further increased, and at the same time, the balance stability of the connection between the end cover connecting region and the end cover assembly is improved.

In some embodiments, the tab connecting region and the first sub-end cover connecting region are respectively arranged in arch shapes, and an outer edge of the tab connecting region and an outer edge of the first sub-end cover connecting region are respectively arranged in arc shapes and are arranged to share the same center. Through the above method, the processing and shaping of the current collecting component is facilitated, and it is easier to adapt to a cylindrical or nearly cylindrical battery cell.

In some embodiments, there is an included angle between connection lines from two outermost connection points of the first sub-end cover connecting region and the transition region in the second reference direction to the center of the outer edge of the tab connecting region, and the included angle is smaller than a central angle of the outer edge of the tab connecting region. Through the above method, the regional area of the tab connecting region that is capable of being connected to the first tab may be ensured, thereby meeting the overcurrent requirements.

In some embodiments, an outer edge of the second sub-end cover connecting region is arranged in an arc shape, and is arranged to share the same center with the outer edge of the first sub-end cover connecting region with equal radiuses. An inner edge of the second sub-end cover connecting region is arranged in an arc shape, and is arranged to share the same center with the outer edge of the first sub-end cover connecting region. Through the above method, the processing and shaping of the current collecting component is facilitated, and it is easier to adapt to a cylindrical battery cell or nearly cylindrical battery cell.

In some embodiments, the current collecting component further has a reference circle having a radius being a connection line from the outermost connection point between the first sub-end cover connecting region and the transition region in the second reference direction to the center of the outer edge of the tab connecting region. The outer edge of the transition region is located inside the reference circle and is arranged at an interval from the reference circle. Through the above method, sufficient hollow space is formed between the transition region and the second sub-end cover connecting region, thereby reducing the amount of material used in the current collecting component and improving the infiltration effect of the electrolyte solution on the electrode assembly.

In some embodiments, the interval width between the outer edge of the transition region and the reference circle in the second reference direction gradually becomes larger in a direction from the first sub-end cover connecting region to the tab connecting region. Through the above method, sufficient hollow space is formed between the transition region and the second sub-end cover connecting region, thereby reducing the amount of material used in the current collecting component and improving the infiltration effect of the electrolyte solution on the electrode assembly.

In some embodiments, the transition region is arranged in a trapezoidal shape, and the width of the transition region in the second reference direction gradually becomes larger in the direction from the first sub-end cover connecting region to the tab connecting region. Through the above method, sufficient hollow space is formed between the transition region and the second sub-end cover connecting region, thereby facilitating the processing and shaping of the outer edge of the transition region.

In some embodiments, in the flat state, when the outer edge of the tab connecting region is projected toward the end cover connecting region in the first reference direction, the projection of the outermost point of the outer edge of the tab connecting region in the second reference direction is located outside the inner edge of the second sub-end cover connecting region. Through the above method, the regional area of the tab connecting region that is capable of being connected to the first tab may be ensured, thereby meeting the overcurrent requirements.

In some embodiments, the outer edge of the tab connecting region and the inner edge of the second sub-end cover connecting region are respectively arranged in arc shapes and share the same center, and the radius of the outer edge of the tab connecting region is larger than the radius of the inner edge of the second sub-end cover connecting region. Through the above method, the regional area of the tab connecting region that is capable of being connected to the first tab can be ensured, which facilitates the processing and shaping of the current collecting component at the same time. Further, it is easier to adapt to a cylindrical or nearly cylindrical battery cell.

In some embodiments, the current collecting component is provided with a first trace line and a second trace line in the second reference direction. The first trace line is arranged to allow the tab connecting region to be bent relative to the transition region along the first trace line. The second trace line is arranged to allow the first sub-end cover connecting region to be bent relative to the transition region along the second trace line. In the flat state, there is a first distance between the first trace line and the second trace line in the first reference direction, and there is a second distance from the second trace line to the outer edge of the first sub-end cover connecting region in the first reference direction. The first distance is greater than a maximum value of the second distance, so that in the bent state, the outer edge of the end cover maintains a predetermined interval from a plane where the first main surface of the tab connecting region is located. Through the above method, the bending of the current collecting component is facilitated, and at the same time, interference between the end cover assembly and the electrode assembly is avoided, which facilitates the welding operation.

In some embodiments, the current collecting component is further provided with a hollow portion. Through the above method, the amount of material used in the current collecting component may be reduced, and the infiltration effect of the electrolyte solution on the electrode assembly may be improved.

In some embodiments, the outer edge of the tab connecting region is arranged in an arc shape and the hollow portion is located at the center of the outer edge of the tab connecting region, or the hollow portion is entirely located within the tab connecting region. Through the above method, the hollow portion located at the center of the outer edge of the tab connecting region can further enhance the infiltration effect of the electrolyte solution on the electrode assembly. When the hollow portion is entirely located in the tab connecting region, the hollow portion may be used as an observation window and may be used for assisting positioning.

In some embodiments, the end cover assembly includes an end cover, and the end cover covers the opening of the case. The electrode lead-out portion includes an annular boss of the end cover protruding toward the electrode assembly, the end cover connecting region is welded to a top surface of the annular boss, and the outer edge of the tab connecting region after welding is capable of overlapping the top surface of the annular boss. Through the above method, the annular boss is used to support the tab connecting region, which can reduce deformation and deflection of the current collecting component and improve the structural stability of the battery cell.

In the fifth aspect, the present application provides an assembling method of the battery cell in the above embodiment. The assembling method includes: providing the above assembling assembly, wherein the current collecting component is in a bent state, and in the bent state, an avoidance is formed between the end cover assembly and the first main surface of the tab connecting region; attaching the second main surface of the tab connecting region to the first tab of the electrode assembly; and welding the tab connecting region to the first tab from the first main surface of the tab connecting region. Through the above method, the welding of the current collecting component and the end cover assembly from the side of the current collecting component can avoid the risk of false welding and excessive welding penetration caused by welding the current collecting component and the end cover assembly from the outer side of the end cover assembly in the conventional assembling method, which is conducive to reducing the defective rate of battery cells in the production process and improving the quality of battery cells.

In some embodiments, the end cover assembly is placed to cover the opening of the case accommodating the electrode assembly, such that the current collecting component is arranged between the electrode assembly and the end cover assembly and is unfolded into an unfolded state. In the unfolded state, the tab connecting region, the transition region, and the end cover connecting region are arranged in a non-overlapping manner in an axial direction of the battery cell. Through the above method, the size occupied by the current collecting component in the axial direction of the battery cell may be reduced, which is beneficial to improving the space utilization of the battery cell.

In a sixth aspect, the present application provides another assembling method of the battery cell in the above embodiment. The assembling method includes: providing an electrode assembly, an end cover assembly, and a current collecting component, wherein the electrode assembly includes a first tab, the end cover assembly is provided with an electrode lead-out portion, and the current collecting component includes a tab connecting region and an end cover connecting region; and forming a first welded portion for welding the end cover connecting region and the electrode lead-out portion and a second welded portion for welding the tab connecting region and the first tab, wherein the penetration depth of the first welded portion formed on the electrode lead-out portion is smaller than the thickness of the electrode lead-out portion. Through the above method, the welding of the current collecting component and the end cover assembly from the side of the current collecting component can avoid the risk of false welding and excessive welding penetration caused by welding the current collecting component and the end cover assembly from the outer side of the end cover assembly in the conventional assembling method, which is conducive to reducing the defective rate of battery cells in the production process and improving the quality of battery cells.

In some embodiments, the current collecting component is bent into a bent state, so that after one of the first welded portion and the second welded portion is formed, an avoidance is formed between the end cover assembly and the electrode assembly, thereby allowing formation of the other of the first welded portion and the second welded portion. Through the above method, the execution of the welding operation may be facilitated.

In some embodiments, the first welded portion is formed from a side of the end cover connecting region away from the electrode lead-out portion, and the second welded portion is formed from a side of the tab connecting region away from the first tab. Through the above method, the execution of the welding operation may be facilitated.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
FIG. 1 is a schematic structural diagram of a vehicle according to some embodiments of the present application;
FIG. 2 is a schematic exploded structural diagram of a battery according to some embodiments of the present application;
FIG. 3 is a schematic sectional structural diagram of a battery cell according to some embodiments of the present application;
FIG. 4 is a schematic structural diagram of a part A of the battery cell shown in FIG. 3;
FIG. 5 is a schematic three-dimensional structural diagram of a current collecting component according to an embodiment of the present application;
FIG. 6 is a schematic diagram of a positional relationship between a current collecting component and an end cover assembly in an assembling completed state according to an embodiment of the present application;
FIG. 7 is a schematic structural diagram of a part B of the battery cell shown in FIG. 3;
FIG. 8 is a schematic structural diagram of a positional relationship between an end cover assembly, a current collecting component, and an electrode assembly in an assembling process according to an embodiment of the present application;
FIG. 9 is a top view of the current collecting component shown in FIG. 5;
FIG. 10 is a top view of a current collecting component according to another embodiment of the present application;
FIG. 11 is a top view of a current collecting component according to still another embodiment of the present application;
FIG. 12 is a schematic diagram of a positional relationship between a current collecting component and an end cover in an assembling completed state according to another embodiment of the present application;
FIG. 13 is a schematic flow chart of an embodiment of an assembling method for a battery cell according to the present application; and
FIG. 14 is a schematic flow chart of another embodiment of an assembling method for a battery cell according to the present application.

Reference numerals in Detailed Description are as follows:
1000a Vehicle;
100a Battery; 200a Controller; 300a Motor;
10a Box body; 11a First part; 12a Second part;
1 Battery cell; 4 Assembling assembly; 10 Current collecting component; 101 Base of current collecting component; 102 Welding aid layer of current collecting component; 110 Tab connecting region; 120 Transition region; 130 End cover connecting region; 131 First sub-end cover connecting region; 132 Second sub-end cover connecting region; 136 Welding bead; 140 Reference circle; 150 First trace line; 151 Second trace line; 160 Hollow portion; 20 Electrode assembly; 21 First tab; 22 Second tab; 30 End cover assembly; 31 Electrode lead-out portion; 32 First welded portion; 33 Second welded portion; 30a End cover; 31a Annular boss; 311 Base of electrode lead-out portion; 312 Welding aid layer of electrode lead-out portion; 40 Case; 41 Opening; 42 Bottom wall; 43 Electrode terminal;
111 Outer edge of tab connecting region; 34 Outer edge of end cover assembly; 134 Outer edge of second sub-end cover connecting region; 133 Outer edge of first sub-end cover connecting region; 135 Inner edge of second sub-end cover connecting region; 121 Outer edge of transition region; 171 First main surface of end cover connecting region; 172 Second main surface of end cover connecting region; 173 First main surface of tab connecting region; 174 Second main surface of tab connecting region;
First reference direction D1; Second reference direction D2; Axial direction D3 of battery cell; Two outermost connection points P1 and P2 of first sub-end cover connecting region and transition region in second reference direction; Outermost points P3 and P4 of outer edge of tab connecting region in second reference direction; Intersection points P5 and P6 of reference line parallel to second reference direction and edges on both sides of transition region; Center O; Included angle θ; Central angle α of outer edge of tab connecting region; First distance d1; Second distance d2; Interval width d3; Width L1 at connection position between transition region and first sub-end cover connecting region; Distance L2 between intersection points of reference line parallel to second reference direction and edges on both sides of transition region; Length L3 cut off by hollow portion; Radius R1 of outer edge of tab connecting region; Inner edge radius R2 of annular boss; Outer edge radius R3 of annular boss.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "include/comprise" and "have" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the quantity, particular order, or primary and secondary relation of the technical features indicated. In the description of the embodiments of the present application, the meaning of "a plurality of" is two or more, unless otherwise explicitly and specifically defined.

Reference herein to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", and the like are based on orientations or positional relationships as shown in the drawings, and are only for the purpose of facilitating and simplifying the descriptions of the embodiments of the present application instead of indicating or implying that apparatuses or elements indicated must have particular orientations, and be constructed and operated in the particular orientations, so that these terms are not construed as limiting the embodiments of the present application.

In the description of the embodiments of the present application, unless otherwise expressly specified and limited, the technical terms "mount", "join", "connect", "fix", and the like should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

With the development of battery technologies, battery cells are applied in increasingly more fields and gradually replace traditional fossil energy in the field of automotive power. A battery cell may store chemical energy and controllably converts the chemical energy into electrical energy. After discharging, the battery can activate active substances by charging and continue to be used.

The battery cell often includes an electrode assembly, a current collecting component, a case, and an end cover assembly. The case is capable of accommodating the electrode assembly, and the end cover assembly is capable of covering an opening of the case. When the end cover assembly covers the opening of the case, it is often necessary to electrically connect it to the electrode assembly through the current collecting component. In the existing assembling method of a battery cell, the welding of the end cover assembly and the current collecting component often requires performing penetration welding from outside the end cover assembly. The end cover assembly needs to have a certain structural stability, and its thickness is relatively large. At the same time, in order to save the internal space of the case, the thickness of the current collecting component is relatively small. Therefore, for the external penetration welding, a molten pool needs to pass through the relatively thick end cover assembly and then reach the relatively thin current collecting component, so that it is difficult to control the penetration depth. If the penetration depth is too small, the end cover assembly is not melted enough, which leads to the risk of false welding between the end cover assembly and the current collecting component, easily causing poor connection. If the penetration depth is too large, there is a risk of excessive welding penetration of the end cover assembly and the current collecting component, which may easily lead to incorrect welding between the current collecting component and the electrode assembly or damage to the electrode assembly due to high temperature, and/or may easily lead to the increase of the risk of an electrolyte solution leaking from cracks to the outside of the battery cell due to the overlarge cracks in the welding position of the two.

In order to reduce the problem of poor welding of the end cover assembly, the applicant found through research that the electrode assembly includes a first tab. The case is used for accommodating the electrode assembly, and the case has an opening. The end cover assembly covers the opening and is provided with an electrode lead-out portion. The current collecting component includes a tab connecting region and an end cover connecting region. The tab connecting region is used for connecting to the first tab. The end cover connecting region is welded to the inner side of the electrode lead-out portion and forms a first welded portion. The penetration depth of the first welded portion formed on the electrode lead-out portion is smaller than or equal to the thickness of the electrode lead-out portion, which facilitates detection when false welding occurs, which may can avoid the occurrence of false welding and also reduce the risk of excessive welding penetration of the end cover assembly and the current collecting component. Furthermore, when the penetration depth is set to be smaller than the thickness of the electrode lead-out portion, the cracks at the welding position of the two are less likely to extend to an outer surface of the current collecting component, thereby effectively avoiding the leakage of an electrolyte solution, being conducive to reducing a defective rate in a battery cell production process, and improving the quality of the battery cell.

A battery cell and an assembling method thereof, a battery, an electrical apparatus, and an assembling assembly disclosed in the embodiments of the present application may be used in various electrical apparatuses that use batteries as power sources or in various energy storage systems that use batteries as energy storage elements. The electrical apparatus may be, but is not limited to, a mobile phone, a tablet, a laptop, an electric toy, an electric tool, a battery vehicle, an electric vehicle, a ship, a spacecraft, and the like. The electric toy may include a fixed or mobile electric toy, such as a game console, an electric vehicle toy, an electric ship toy, an electric airplane toy, and the like. The spacecraft may include an airplane, a rocket, a space shuttle, a spaceship, and the like.

For the convenience of description in the following embodiments, an electrical apparatus being a vehicle 1000a according to an embodiment of the present application is taken as an example for the description.

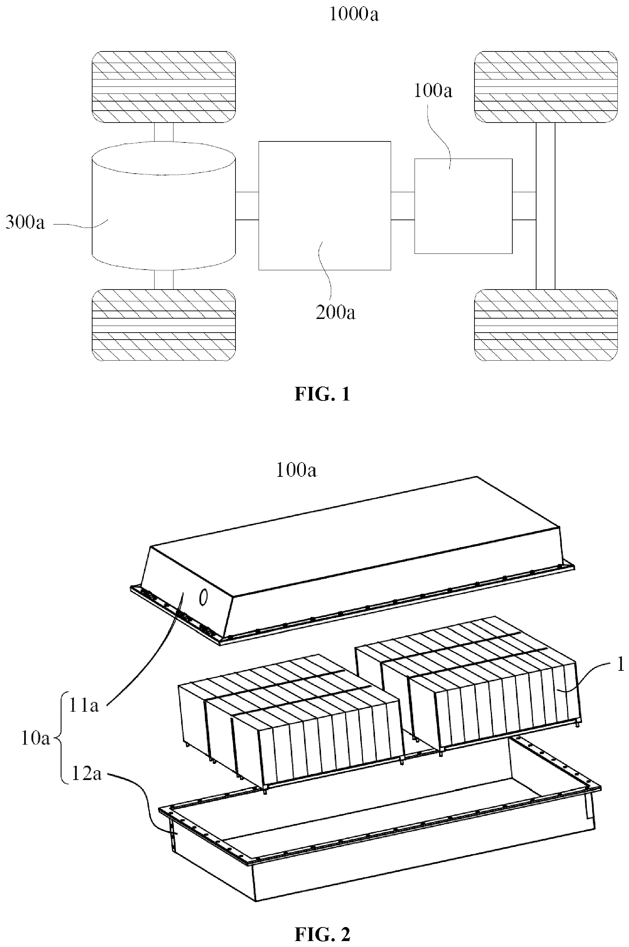

Referring to FIG. 1, the vehicle 1000a may be a fuel vehicle, a gas vehicle, or a new energy vehicle. The new energy vehicle may be an all-electric vehicle, a hybrid electric vehicle, an extended range electric vehicle, or the like. The vehicle 1000a is internally provided with a battery 100a, and the battery 100a may be arranged at a bottom or head or tail of the vehicle 1000a. The battery 100a may be used to supply power to the vehicle 1000a. For example, the battery 100a may be used as an operating power source of the vehicle 1000a. The vehicle 1000a may further include a controller 200a and a motor 300a. The controller 200a is used to control the battery 100a to power the motor 300a, for example, to meet working power demands during starting, navigation, and driving of the vehicle 1000a.

In some embodiments of the present application, the battery 100a not only may serve as an operating power source of the vehicle 1000a, but also may serve as a driving power source of the vehicle 1000a, thus replacing or partially replacing fuel or natural gas to provide driving power for the vehicle 1000a.

Referring to FIG. 2, the battery 100a includes a box body 10a and a battery cell 1, and the battery cell 1 is accommodated within the box body 10a. The box body 10a is used for providing an accommodating space for the battery cell 1, and the box body 10a may adopt various structures. In some embodiments, the box body 10a may include a first part 11a and a second part 12a. The first part 11a and the second part 12a are covered by each other, and the first part 11a and the second part 12a together define the accommodating space for accommodating the battery cell 1. The second part 12a may be of a hollow structure with one end open, the first part 11a may be of a plate-like structure, and the first part 11a covers the opening side of the second part 12a, so that the first part 11a and the second part 12a together define the accommodating space. Each of the first part 11a and the second part 12a may also be of a hollow structure with one side open, and the opening side of the first part 11a covers the opening side of the second part 12a. Of course, the box body 10a formed by the first part 11a and the second part 12a may be in various shapes, such as a cylinder or a cuboid.

In the battery 100a, there may be a plurality of battery cells 1, and the plurality of battery cells 1 may be connected in series connection, or parallel connection, or parallel-series connection. The parallel-series connection means that some of the plurality of battery cells 1 are connected in series and some are connected in parallel. The plurality of battery cells 1 may be directly connected in series, in parallel, or in parallel-series connection, and then the plurality of battery cells 1 are assembled as a whole to be accommodated in the box body 10a. Of course, the battery 100a may also be formed in the manner that the plurality of battery cells 1 are first connected in series, in parallel, or in parallel-series connection to form battery modules, and the plurality of battery modules are then connected in series, in parallel, or in parallel-series connection into a whole, which is accommodated in the box body 10a. The battery 100a may further include other structures. For example, the battery 100a may further include a convergence component for implementing electrical connection between the plurality of battery cells 1.

Each battery cell 1 may be a secondary battery or a primary battery; and may also be, but is not limited to a lithium-sulfur battery, a sodium-ion battery, or a magnesium-ion battery. The battery cell 1 may be in a cylindrical, flat, or rectangular solid shape, or in other shapes.

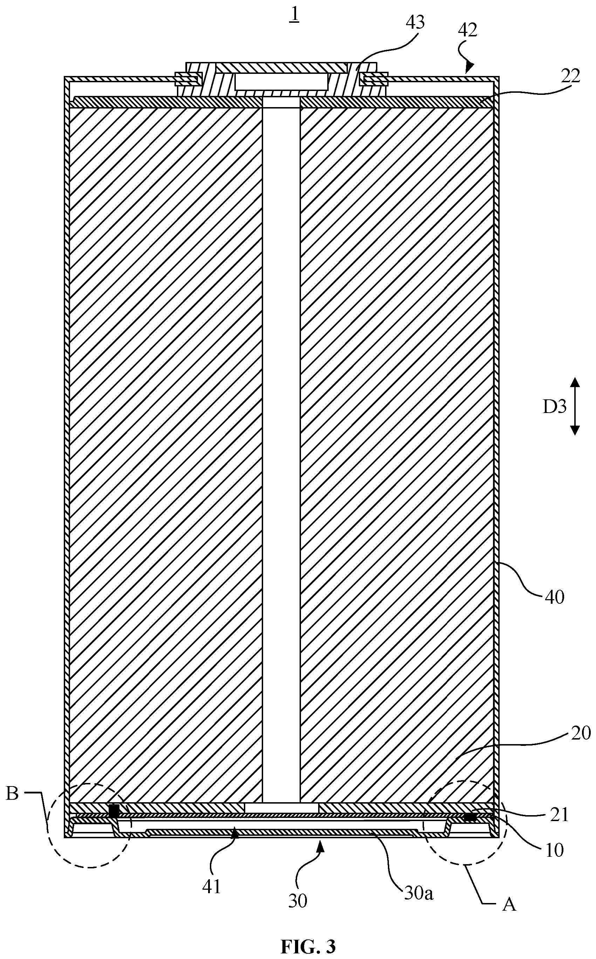

Referring to FIG. 3, the battery cell 1 refers to the smallest unit constituting a battery. In this embodiment, a cylindrical battery cell is taken as an example for description. As shown in FIG. 3, the battery cell 1 includes an end cover assembly 30, a case 40, an electrode assembly 20, and other functional components.

The end cover assembly 30 refers to a component that covers an opening of the case 40 to isolate the internal environment of the battery cell 1 from the external environment. Without limitation, the shape of the end cover assembly 30 may be adaptive to the shape of the case 40 so as to be matched with the case 40. Optionally, the end cover assembly 30 may be made of a material (e.g., an aluminum alloy) with a certain hardness and strength, accordingly, the end cover assembly 30 is not easily deformed when being subjected to extrusion and collisions, such that the battery cell 1 is capable of having higher structural strength, and the safety performance can also be improved. Functional components such as an electrode lead-out portion may be arranged on the end cover assembly 30. The electrode lead-out portion may be used for being electrically connected to the electrode assembly 20, and for outputting or inputting electric energy of the battery cell 1. In some embodiments, the end cover assembly 30 may further be provided with a pressure relief mechanism used for relieving an internal pressure of the battery cell 1 when the internal pressure or temperature reaches a threshold. The end cover assembly 30 may be made of various materials, such as copper, iron, aluminum, stainless steel, aluminum alloy, and plastic, which is not particularly limited in this embodiment of the present application. In some embodiments, an insulating member may further be arranged on an inner side of the end cover assembly 30, and the insulating member may be used for isolating an electrical connecting component in the case 40 from the end cover assembly 30, thereby reducing the risk of short circuit. Exemplarily, the insulating member may be made of plastic, rubber, and the like.

The case 40 is an assembly used to be matched with the end cover assembly 30 to form the internal environment of the battery cell 1, where the formed internal environment may be used to accommodate the electrode assembly 20, an electrolyte solution, and other components. The case 40 and the end cover assembly 30 may be separate components, an opening may be formed in the case 40, and at the opening, the opening is covered by the end cover assembly 30 so as to form the internal environment of the battery cell 1. Without limitation, the end cover assembly 30 and the case 40 may also be integrated. Specifically, the end cover assembly 30 and the case 40 may form a common connection surface before other components enter the case. When an interior of the case 40 is required to be encapsulated, the case 40 is covered by the end cover assembly 30. The case 40 may be of various shapes and sizes, such as a rectangular solid, a cylinder, and a hexagonal prism. Specifically, the shape of the case 40 may be determined according to the specific shape and size of the electrode assembly 20. The case 40 may be made of various materials, such as copper, iron, aluminum, stainless steel, aluminum alloy, and plastic, which is not particularly limited in this embodiment of the present application.

The electrode assembly 20 is a component in a battery cell 1 where an electrochemical reaction occurs. The case 40 may include one or a plurality of electrode assemblies 20. The electrode assembly 20 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the electrode assembly, and the portions, without the active materials, of the positive electrode plate and the negative electrode plate respectively constitute tabs. The positive tab and the negative tab may be located at one end of the main body part together or located at two ends of the main body part respectively. In charging and discharging processes of the battery, the positive electrode active material and the negative electrode active material react with the electrolyte solution, and the tabs are connected the electrode terminals to form a current loop. The tab may be a first tab or a second tab as described below.

According to some embodiments of the present application, as shown in FIG. 3 to FIG. 6, the battery cell 1 described in the battery cell embodiment of the present application includes an electrode assembly 20, a case 40, an end cover assembly 30, and a current collecting component 10. The electrode assembly 20 includes a first tab 21. The case 40 is used for accommodating the electrode assembly 20, and the case 40 has an opening 41. The end cover assembly 30 covers the opening 41 and is provided with an electrode lead-out portion 31. The current collecting component 10 includes a tab connecting region 110 and an end cover connecting region 130. The tab connecting region 110 is used for connecting to the first tab 21. The end cover connecting region 130 is welded to the inner side of the electrode lead-out portion 31 and forms a first welded portion 32. The penetration depth of the first welded portion 32 formed on the electrode lead-out portion 31 is smaller than or equal to the thickness of the electrode lead-out portion 31.

In this embodiment, the inner side of the electrode lead-out portion 31 refers to a side of the electrode lead-out portion 31 facing the interior of the case 40 after the end cover assembly 30 is placed to cover the opening 41. The current collecting component 10 may be arranged between the end cover assembly 30 and the electrode assembly 20, and has a function of forming a current path between the end cover assembly 30 and the electrode assembly 20. By connecting the tab connecting region 110 to the first tab 21, the current collecting component 10 may form a current path with the electrode assembly 20. By welding the end cover connecting region 130 to the electrode lead-out portion 31, the current collecting component 10 may form a current path with the end cover assembly 30. The tab connecting region 110 and the end cover connecting region 130 may be connected to each other and form a current path. In the charging and discharging processes of the battery cell 1, current may flow from the electrode assembly 20 to the end cover assembly 30 through the tab connecting region 110 and the end cover connecting region 130, or the current may also flow from the end cover assembly 30 to the electrode assembly 20 through the end cover connecting region 130 and the tab connecting region 110.

The formation of the first welded portion 32 in the end cover connecting region 130 means that the welding process between the end cover assembly 30 and the current collecting component 10 is melting the end cover connecting region 130 from a side of the current collecting component 10 and extending to the interior of the electrode lead-out portion 31, and further forming the first welded portion 32 inside the electrode lead-out portion 31. The penetration depth of the first welded portion 32 formed on the electrode lead-out portion 31 is smaller than or equal to the thickness of the electrode lead-out portion 31. Through the above method, the risk of false welding or excessive welding penetration caused by welding the current collecting component 10 and the end cover assembly 30 from the outer side of the end cover assembly 30 in the conventional assembling method. Furthermore, when the penetration depth of the first welded portion 32 formed on the electrode lead-out portion 31 is set to be smaller than the thickness of the electrode lead-out portion 31, the cracks at the welding position of the two are less likely to extend to an outer surface of the electrode lead-out portion 31, thereby effectively avoiding the leakage of an electrolyte solution, being conducive to reducing a defective rate in a battery cell 1 production process, and improving the quality of the battery cell 1. The cracks are mainly caused by the stress formed by expansion of the end cover assembly 30 and the current collecting component 10 in the welding process when heated and cooling after welding.

According to some embodiments of the present application, optionally, the penetration depth of the first welded portion 32 formed on the electrode lead-out portion 31 is between 1/4 and 3/4 of the thickness of the electrode lead-out portion 31. Sufficient connection strength can be obtained between the electrode lead-out portion 31 and the current collecting component 10, and a margin is also capable of being left for the electrode lead-out portion 31, thereby reducing the risk of the cracks extending to the outer surface of the end cover assembly 30.

According to some embodiments of the present application, optionally, a base material of the electrode lead-out portion 31 is different from a base material of the current collecting component 10, and/or the melting point of the base material of the electrode lead-out portion 31 is greater than the melting point of the base material of the current collecting component 10.

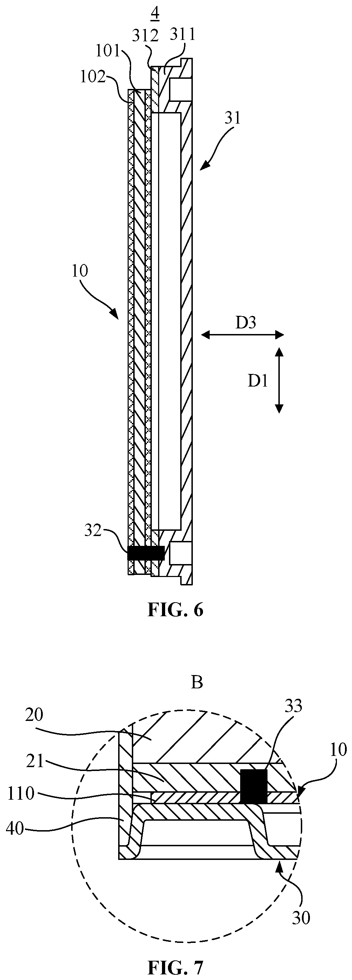

Specifically, as shown in FIG. 6, the base material of the electrode lead-out portion 31 may refer to the material of a base 311 of the electrode lead-out portion 31, and the base material of the current collecting component 10 may refer to the material of a base 101 of the current collecting component 10. The base refers to a component that forms the basic shape of the relevant component and mainly provides structural strength. A welding aid layer or other material layers that play other auxiliary roles may be further formed on the base.

Through the above method, different base materials may be used to meet respective structural characteristics of the electrode lead-out portion 31 and the current collecting component 10. For example, the electrode lead-out portion 31 needs to meet a predetermined structural strength, the current collecting component 10 needs to meet a certain bendability, and the like. In addition, when the end cover connecting region 130 and the electrode lead-out portion 31 are welded, the lower melting point of the base material of the current collecting component 10 is conducive to reducing the welding temperature, that is, the formation temperature of the first welded portion 32, and the relatively higher melting point of the base material of the electrode lead-out portion 31 ensures that the electrode lead-out portion 31 is not easily welded through, thereby reducing the risk of liquid leakage.

According to some embodiments of the present application, optionally, the thermal expansion coefficient of the base material of the electrode lead-out portion 31 is smaller than the thermal expansion coefficient of the base material of the current collecting component 10.

The thermal expansion coefficient is the change in a length value caused by a unit temperature change under an equal pressure (p is constant). When the thermal expansion coefficient is a positive value, in the welding process, due to the temperature increase, the welding point of the electrode lead-out portion 31 is thermally expanded, thereby causing a stress-strain and cracks. Using a base material with a smaller thermal expansion coefficient for the electrode lead-out portion 31 is beneficial to reducing generation of the stress-strain and the cracks of the electrode lead-out portion 31 and reducing the risk of liquid leakage.

According to some embodiments of the present application, optionally, the base material of the electrode lead-out portion 31 is steel, and the base material of the current collecting component 10 is copper or aluminum.

The base material of the electrode lead-out portion 31 being steel allows the base 311 of the electrode lead-out portion 31 to have a lower thermal expansion coefficient, and also allows the battery lead-out portion 31 to have good mechanical strength. The melting point of copper or aluminum is lower than that of steel. The base material of the current collecting component 10 being copper or aluminum allows the current collecting component 10 to be welded more easily. At the same time, copper or aluminum has good electrical conductivity, and is soft in texture and easy to process and shape, thus being suitable for preparing the current collecting component 10.

According to some embodiments of the present application, as shown in FIG. 6, optionally, the surface of the electrode lead-out portion 31 is provided with a welding aid layer 312 and/or the surface of the current collecting component 10 is provided with a welding aid layer 102.

In the welding process, the welding aid layer 312 and/or the welding aid layer 102 can help and promote the welding process, and at the same time have a protective effect, prevent an oxidation reaction, and reduce welding defects. By arranging the welding aid layer, it is beneficial to improving the welding effect between the current collecting component 10 and the electrode lead-out portion 31.

The material of the welding aid layer 312 and/or the welding aid layer 102 may be, for example, rosin or a nickel/tin plating layer, or the like. Optionally, the welding aid layer 312 and/or the welding aid layer 102 may be made by an electroplating process.

Optionally, the thickness of the welding aid layer 312 and/or the welding aid layer 102 is designed to be greater than or equal to 1 µm (micron) and smaller than or equal to 3 µm.

Further, the current collecting component 10 includes a base 101, and the welding aid layer 102 may be arranged on an inner surface and an outer surface of the base 101 of the current collecting component 10.

According to some embodiments of the present application, optionally, the electrode lead-out portion 31 includes a base 311, the welding aid layer 312 is arranged on the base 311, and at least part of the first welded portion 32 is located in the base 311.

Through the above method, the first welded portion 32 may penetrate the welding aid layer 312 and further extend into the base 311. By arranging the welding aid layer 312, it is conducive to improving the welding effect of the electrode lead-out portion 31. At the same time, the base 311 can play a structural supporting role and thus has a high structural strength, and the first welded portion 32 extends into the base 311, which is conducive to improving the connection strength.

According to some embodiments of the present application, optionally, the first welded portion 32 is arranged not to penetrate the base 311. The base 311 can play a structural supporting role and thus has high structural strength, and the first welded portion 32 does not penetrate the base 311, which is capable of further reducing the risk of liquid leakage.

According to some embodiments of the present application, optionally, the welding aid layer 102 and/or the welding aid layer 312 includes at least one of nickel or tin. When the base 101 and/or the base 311 is not easy to weld, arranging nickel or tin on the surface of the base 101 and/or the base 311 may improve the weldability of the electrode lead-out portion 31 and/or the current collecting component 10 and improve the welding effect. At the same time, nickel or tin is capable of conducting electricity, and does not affect the current connection between the electrode lead-out portion 31 and the current collecting component 10 after welding.

According to some embodiments of the present application, optionally, the first welded portion 32 is formed from a side of the end cover connecting region 130 away from the electrode lead-out portion 31 and extends into the electrode lead-out portion 31.

Specifically, the welding operation is performed from a side of the end cover connecting region 130 away from the electrode lead-out portion 31, forming the first welded portion 32 that penetrates the end cover connecting region 130 and further extends into the electrode lead-out portion 31. The welding is performed from the side of the end cover connecting region 130 away from the electrode lead-out portion 31, which not only facilitates the performing of the welding operation, but also makes it difficult to weld through the electrode lead-out portion 31.

According to some embodiments of the present application, as shown in FIG. 7, optionally, the tab connecting region 110 is welded to the first tab 21 and forms a second welded portion 33. The second welded portion 33 is formed from a side of the tab connecting region 110 away from the first tab 21 and extends into the first tab 21.

Specifically, the welding process may be performed from a side of the tab connecting region 110 away from the first tab 21 to form the second welded portion 33 that penetrates the tab connecting region 110 and further extends into the first tab 21. The welding is performed from the side of the tab connecting region 110 away from the first tab 21, which is capable of facilitating the execution of the welding operation.

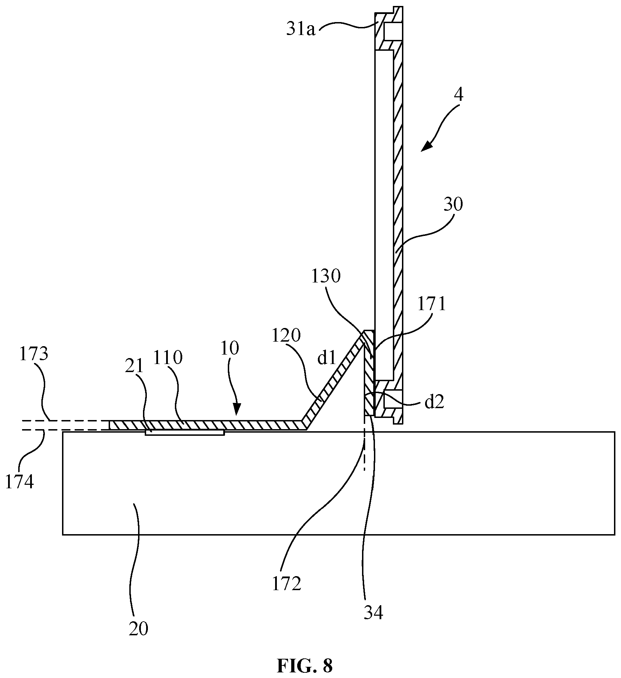

According to some embodiments of the present application, as further shown in FIG. 8 to FIG. 9, optionally, the current collecting component 10 further includes a transition region 120 connected between the tab connecting region 110 and the end cover connecting region 130. The transition region 120 is arranged to be capable of being bent relative to the end cover connecting region 130, and the tab connecting region 110 is arranged to be capable of being bent relative to the transition region 120.

Through the above method, the transition region 120 is capable of providing assembly redundancy for the tab connecting region 110 and the end cover connecting region 130. Specifically, by bending relative to the transition region 120 respectively, the positional relationship between the tab connecting region 110 and the end cover connecting region 130 may be adjusted, and at the same time, the positional relationship between the end cover assembly 30 and the electrode assembly 20 is also capable of being adjusted to facilitate welding and assembly. For example, as described below, the end cover assembly 30 may switch between a flat state, a bent state, and an unfolded state according to different assembly processes.

According to some embodiments of the present application, optionally, as shown in FIG. 3 to FIG. 4 and FIG. 8 to FIG. 9, the current collecting component 10 in a flat state has a first reference direction D1 and a second reference direction D2 arranged along a main surface of the current collecting component 10 and perpendicular to each other. The tab connecting region 110, the transition region 120, and the end cover connecting region 130 are arranged sequentially in the first reference direction D1. A first main surface 171 of the end cover connecting region 130 is attached to the electrode lead-out portion 31, and is welded to the electrode lead-out portion 31 through the first welded portion 32 formed from a second main surface 172 of the end cover connecting region 130. Through the above method, the connection area of welding between the electrode lead-out portion 31 and the end cover connecting region 130 is capable of being increased, which facilitates the execution of the welding operation.

According to some embodiments of the present application, optionally, a second main surface 174 of the tab connecting region 110 is attached to the first tab 21, and is welded to the first tab 21 through the second welded portion 33 formed from a first main surface 173 of the tab connecting region 110. The first main surface 173 of the tab connecting region 110 and the first main surface 171 of the end cover connecting region 130 are located on the same side of the current collecting component 10. Through the above method, it is capable of facilitating the execution of the welding operation in the assembling process, and improving the assembly efficiency.

Specifically, the electrode lead-out portion 31 and the first tab 21 may be welded to the current collecting component 10 on two sides of the current collecting component 10 respectively, and the welding process penetrates the current collecting component 10. This arrangement facilitates the execution of the welding operation, and it is also not easy to weld through the electrode lead-out portion 31, thereby reducing the risk of liquid leakage. Furthermore, for the battery cell 1, the first welded portion 32 and the second welded portion 33 are located inside the battery cell 1, thereby avoiding exposure from the surface of the battery cell 1, and further improving the aesthetics of the battery cell 1.

Optionally, the current collecting component 10 is formed from a sheet material by stamping or other processing, and the "flat state" mentioned above may mean that the main surfaces of at least one side of the various above parts of the current collecting component 10 are coplanar with each other.

Optionally, the "flat state" referred to above may also mean that in the thickness direction of the various parts of the current collecting component 10, the various above parts of the current collecting component 10 are located in the same reference plane, and at this point, the first reference direction D1 and the second reference direction D2 are two reference directions located in the reference plane.

Optionally, the tab connecting region 110, the transition region 120, and the end cover connecting region 130 are all uniform in thickness, and the thicknesses of the three are consistent.

According to some embodiments of the present application, optionally, as shown in FIG. 3, after the battery cell 1 is assembled, the current collecting component 10 is in an unfolded state between the electrode assembly 20 and the end cover assembly 30. In the unfolded state, the tab connecting region 110, the transition region 120, and the end cover connecting region 130 are arranged in a non-overlapping manner in an axial direction D3 of the battery cell 1. The axial direction D3 of the battery cell 1 also refers to a covering direction of the end cover assembly 30 relative to the case 40.

Through the above method, single layers are arranged in the vertical direction of the axial direction D3 of the battery cell 1, which may reduce the size occupied by the current collecting component 10 in the axial direction D3 of the battery cell 1, thus being conducive to improving the space utilization of the battery cell 1.

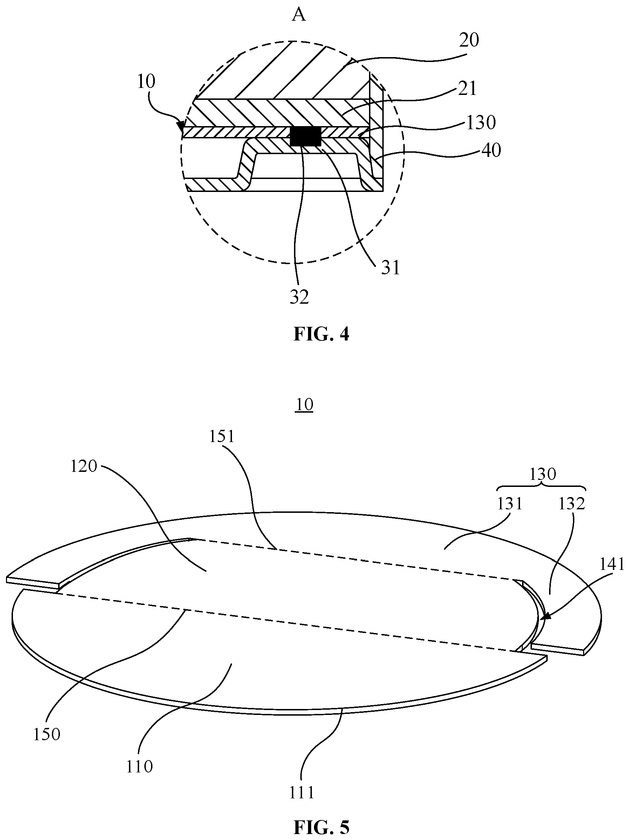

According to some embodiments of the present application, optionally, as shown in FIG. 4 and FIG. 8, the current collecting component 10 is arranged to be capable of being in a bent state in an assembling process of the battery cell 1. Therefore, after one of the first welded portion 32 and the second welded portion 33 is formed, an avoidance is formed between the end cover assembly 30 and the electrode assembly 20, thereby allowing formation of the other of the first welded portion 32 and the second welded portion 33.

Specifically, after the first welded portion 32 is formed first, if the current collecting component 10 remains in the flat state, the end cover assembly 30 may block the first main surface 173 of the tab connecting region 110, making it difficult to form the second welded portion 33 on the first main surface 173 of the tab connecting region 110 through welding. If the current collecting component 10 is in the bent state, an avoidance is formed between the end cover assembly 30 and the first main surface 173 of the tab connecting region 110, which facilitates welding of the tab connecting region 110 and the electrode assembly 20.

Similarly, after the second welded portion 33 is formed first, if the current collecting component 10 is in the flat state, the electrode assembly 20 may block the second main surface 172 of the end cover connecting region 130, making it difficult to form the first welded portion 32 on the second main surface 172 of the end cover connecting region 130 through welding. If the current collecting component 10 is in the bent state, an avoidance is formed between the electrode assembly 20 and the second main surface 172 of the end cover connecting region 130, which facilitates welding of the end cover connecting region 130 and the end cover assembly 30.

According to some embodiments of the present application, optionally, in the bent state, an avoidance is formed between the end cover assembly 30 and the first main surface 173 of the tab connecting region 110. Through the above method, the end cover assembly 30 and the current collecting component 10 are allowed to be pre-assembled into an assembling assembly 4 as shown in FIG. 8, and then the tab connecting region 110 and the electrode assembly 20 are welded, thereby improving the assembling efficiency.

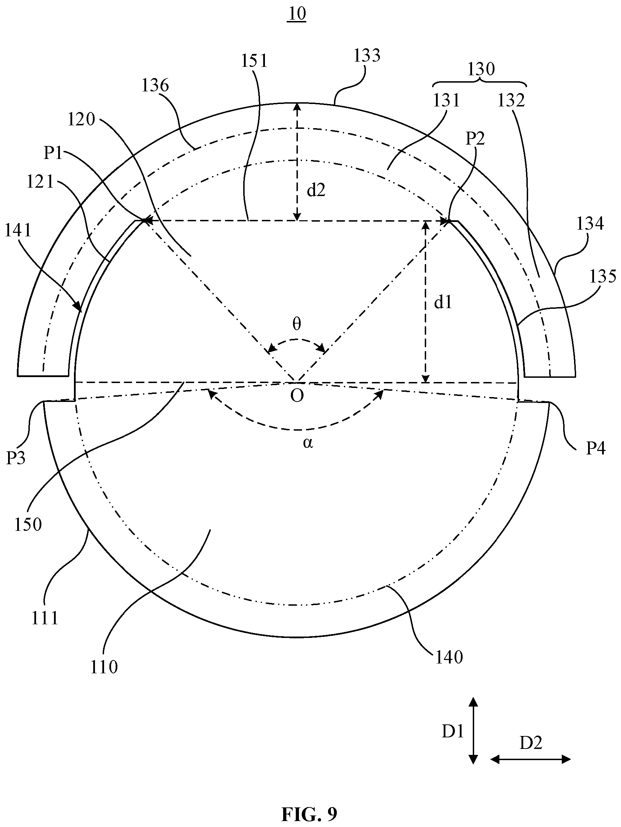

According to some embodiments of the present application, optionally, as shown in FIG. 9 to FIG. 11, the end cover connecting region 130 includes a first sub-end cover connecting region 131 and a second sub-end cover connecting region 132. The first sub-end cover connecting region 131 is connected to the tab connecting region 110, and the second sub-end cover connecting region 132 is connected to the first sub-end cover connecting region 131 and is arranged to maintain a gap with the tab connecting region 110. The first sub-end cover connecting region 131 and the second sub-end cover connecting region 132 are respectively welded to the electrode lead-out portion 31 through the first welded portion 32.

Through the above method, the welding area of the end cover connecting region 130 and the end cover assembly 30 may be increased, which is beneficial to maintaining a stable connection between the current collecting component 10 and the end cover assembly 30 and meeting overcurrent requirements between the end cover assembly 30 and the current collecting component 10.

Specifically, as shown in FIG. 9, the second sub-end cover connecting region 132 is connected to the tab connecting region 110 through the first sub-end cover connecting region 131, and a welding bead 136 is a path on the current collecting component 10 provided for welding to form the first welded portion 32. Compared with only arranging the first sub-end cover connecting region 131, arranging the second sub-end cover connecting region 132 connected to the first sub-end cover connecting region 131 may increase the length of the welding bead 136 of the end cover connecting region 130, thereby increasing the connection area between the end cover connecting region 130 and the end cover assembly 30, which is conducive to maintaining a stable connection between the current collecting component 10 and the end cover assembly 30 while ensuring the overcurrent requirements between the current collecting component 10 and the end cover assembly 30.

Furthermore, a certain gap is maintained between the second sub-end cover connecting region 132 and the tab connecting region 110, so that the bending between the first sub-end cover connecting region 131 and the tab connecting region 110 may not be affected by the second sub-end cover connecting region 132, thereby being capable of achieving the effective avoidance described above. It is worth noting that the second sub-end cover connecting region 132 is not limited to the form shown in the drawings of the present application.

According to some embodiments of the present application, optionally, the current collecting component 10 further includes the transition region 120 arranged between the first sub-end cover connecting region 131 and the tab connecting region 110. The current collecting component 10 in the flat state has the first reference direction D1 and the second reference direction D2 arranged along the main surface of the current collecting component 10 and perpendicular to each other. The tab connecting region 110, the transition region 120, and the first sub-end cover connecting region 131 are arranged sequentially in the first reference direction D1. The second sub-end cover connecting region 132 is located outside the transition region 120 at least in the second reference direction D2 and extends toward the tab connecting region 110. Certain gaps are maintained between the second sub-end cover connecting region 132 and the transition region 120 as well as the tab connecting region 110. Through the above method, the connection area between the end cover connecting region 130 and the end cover assembly 30 may be increased, and the space utilization rate may be improved at the same time. Furthermore, there will be no interference formed between the second sub-end cover connecting region 132 and the tab connecting region 110.

Specifically, limited by the size of the battery cell 1, the size of the current collecting component 10 in the axial direction D3 perpendicular to the battery cell 1 should be within a certain range to meet the requirement that the current collecting component 10 is accommodated within the space provided by the case 40. The second sub-end cover connecting region 132 is located outside the transition region 120 at least in the second reference direction D2 and extends toward the tab connecting region 110, so as to ensure that the end cover connecting region 130 and the end cover assembly 30 have sufficient connection area, while making full use of the size space provided by the battery cell 1 for the current collecting component 10.

Certain gaps are maintained between the second sub-end cover connecting region 132 and the transition region 120 as well as the tab connecting region 110. In other words, the second sub-end cover connecting region 132 is not directly connected to the transition region 120 and the tab connecting region 110, but is connected to the transition region 120 through the first sub-end cover connecting region 131, and further connected to the tab connecting region 110 through the first sub-end cover connecting region 131 and the transition region 120. Furthermore, as described above, the bending between the first sub-end cover connecting region 131, the transition region 120, and the tab connecting region 110 will not be limited by the second sub-end cover connecting region 132, thereby being capable of achieving the effective avoidance. In addition, certain gaps are maintained between the second sub-end cover connecting region 132 and the transition region 120 as well as the tab connecting region 110, which is conducive to infiltration of the electrolyte solution in the electrode assembly 20.

Optionally, the welding bead 136 of the end cover connecting region 130 matches the shape of the end cover connecting region 130.

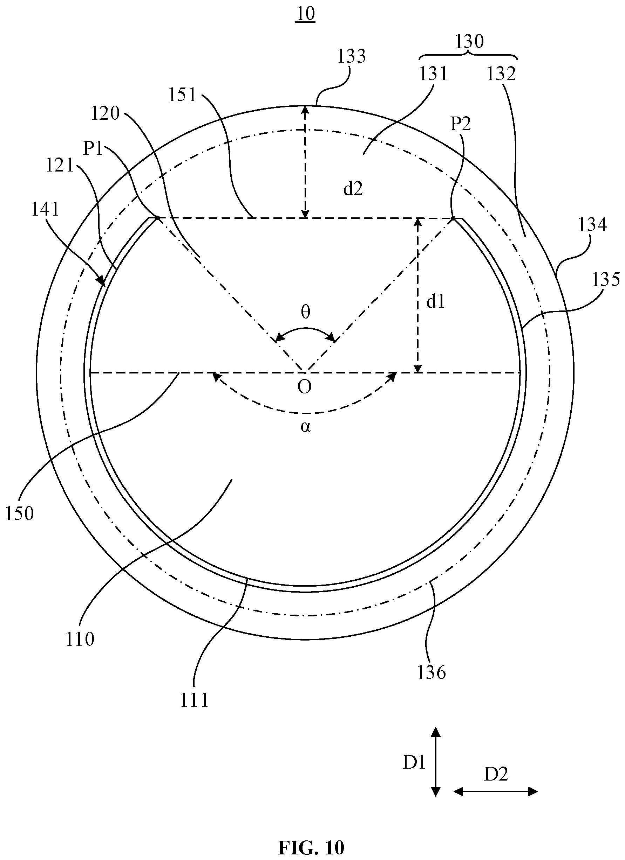

According to some embodiments of the present application, optionally, as shown in FIG. 10, the second sub-end cover connecting region 132 is further extended to be located outside the tab connecting region 110 in the second reference direction D2.

Through the above method, the connection area between the end cover connecting region 130 and the end cover assembly 30 may be further increased, and the space utilization rate may be improved at the same time.

According to some embodiments of the present application, optionally, there is one second sub-end cover connecting region 132. Two ends of the second sub-end cover connecting region 132 are respectively connected to the first sub-end cover connecting region 131, and are arranged around the transition region 120 and the tab connecting region 110.

Through the above method, the second sub-end cover connecting region 132 and the first sub-end cover connecting region 131 may form a closed loop, so that the length of the welding bead 136 may be maximized while meeting the space condition provided by the case 40, the connection area between the end cover connecting region 130 and the end cover assembly 30 may be further increased, and the space utilization is improved at the same time.

It is worth noting that the second sub-end cover connecting region 132 further extended to be located outside the tab connecting region 110 in the second reference direction D2 is not limited to the closed loop form shown in FIG. 10. The second sub-end cover connecting region 132 may also be arranged in an open manner.

According to some embodiments of the present application, as shown in FIG. 9, optionally, there are two second sub-end cover connecting regions 132, and they are respectively located on two opposite sides of the transition region 120 in the second reference direction D2.

Specifically, one end of each second sub-end cover connecting region 132 is connected to the first sub-end cover connecting region 131 and extends toward the tab connecting region 110. The other end of the second sub-end cover connecting region 132 may be located outside the transition region 120 or outside the tab connecting region 110. Through the above method, the balance stability of the connection between the current collecting component 10 and the end cover assembly 30 may be improved.

According to some embodiments of the present application, optionally, the tab connecting region 110 and the first sub-end cover connecting region 131 are respectively arranged in arch shapes. Through the above method, the tab connecting region 110 and the first sub-end cover connecting region 131 are more easily adapted to arc-shaped edges of the case 40 and/or the end cover assembly 30. In particular, when the battery cell 1 is arranged in a cylindrical or nearly cylindrical shape, the above arrangement may make full use of the space provided by the case 40. Furthermore, straight edges of the arch shape may ensure a sufficient overcurrent width between the tab connecting region 110 and the first sub-end cover connecting region 131, thereby ensuring the overcurrent requirements between the tab connecting region 110 and the end cover connecting region 130.

According to some embodiments of the present application, optionally, when the current collecting component 10 is in the flat state, an outer edge 111 of the tab connecting region 110 and an outer edge 133 of the first sub-end cover connecting region 131 are respectively arranged in arc shapes and are arranged to share the same center O. Through the above method, the outer edge 133 of the first sub-end cover connecting region 131 and the outer edge 111 of the tab connecting region 110 are arranged in concentric arcs, which may reduce the processing difficulty of the current collecting component 10 and facilitate the processing and shaping of the current collecting component 10, and is easier to adapt to the cylindrical or nearly cylindrical battery cell 1.

Optionally, the center O of the outer edge 111 of the tab connecting region 110 falls on a central axis of the battery cell 1 or the electrode assembly 20.

According to some embodiments of the present application, as shown in FIG. 9 and FIG. 10, optionally, in the flat state of the current collecting component 10, the outer edge 111 of the tab connecting region 110 is arranged in an arc shape. There is an included angle θ between connection lines from two outermost connection points P1 and P2 of the first sub-end cover connecting region 131 and the transition region 120 in the second reference direction D2 to the center O of the outer edge 111 of the tab connecting region 110, and the included angle θ is smaller than a central angle α of the outer edge 111 of the tab connecting region 110.

Through the above method, the regional area of the tab connecting region 110 that is capable of being connected to the first tab 21 may be ensured, thereby meeting the overcurrent requirements. Specifically, the end cover connecting region 130 increases the connection area with the end cover assembly 30 through the additionally arranged second sub-end cover connecting region 132, and therefore, the first sub-end cover connecting region 131 may be appropriately reduced to guarantee the connection area between the tab connecting region 110 and the first tab 21, and further ensure the overcurrent requirements between the tab connecting region 110 and the electrode assembly 20.

Optionally, the sum of the included angle θ and the central angle α is smaller than 360 degrees.

According to some embodiments of the present application, optionally, the central angle α of the outer edge 111 of the tab connecting region 110 is 120 degrees to 240 degrees, and the included angle θ is 80 degrees to 120 degrees. For example, the central angle α may be set to 180 degrees, and the included angle θ may be 120 degrees or 150 degrees. For another example, the central angle α may be set to 150 degrees, and the included angle θ may be 90 degrees or 120 degrees. Through the above method, the regional area of the tab connecting region 110 that is capable of being connected to the first tab 21 and the regional area of the end cover connecting region 130 that is capable of being connected to the electrode lead-out portion 31 are capable of being ensured at the same time.

According to some embodiments of the present application, optionally, when the current collecting component 10 is in the flat state, the outer edge 133 of the first sub-end cover connecting region 131 and the outer edge 134 of the second sub-end cover connecting region 132 are respectively arranged in arc shapes and are arranged to share the same center O in the same radius. Through the above method, the processing and shaping of the current collecting component 10 is facilitated, and it is easier to adapt to a cylindrical battery cell 1 or nearly cylindrical battery cell 1.

In some embodiments, as shown in FIG. 10, the outer edge 133 of the first sub-end cover connecting region 131 and the outer edge 134 of the second sub-end cover connecting region 132 may form a complete circle. In some other embodiments, as shown in FIG. 9, the outer edge 133 of the first sub-end cover connecting region 131 and the outer edge 134 of the second sub-end cover connecting region 132 may form an arc.

According to some embodiments of the present application, optionally, in the flat state of the current collecting component 10, the outer edge 134 of the second sub-end cover connecting region 132 and an inner edge 135 of the second sub-end cover connecting region 132 are arranged in arc shapes and are arranged to share the same center O. A ratio between the radiuses of the outer edge 134 of the second sub-end cover connecting region 132 and the inner edge 135 of the second sub-end cover connecting region 132 is 1.1 to 1.3. Through the above method, the connection area between the second sub-end cover connecting region 132 and the electrode lead-out portion 31 may be increased, while ensuring the overcurrent requirements between the end cover connecting region 130 and the tab connecting region 110. Specifically, the second sub-end cover connecting region 132 is located outside the transition region 120, and therefore, the two are arranged complementarily. If the width of the second sub-end cover connecting region 132 is too small, the connection area between the second sub-end cover connecting region 132 and the electrode lead-out portion 31 cannot be guaranteed, and they even cannot be effectively welded. If the width of the second sub-end cover connecting region 132 is too large, the width of the transition region 120 is correspondingly reduced, so that the transition region 120 is unable to meet the overcurrent requirements between the end cover connecting region 130 and the tab connecting region 110.

In addition, the inner edge 135 of the second sub-end cover connecting region 132 is arranged in an arc shape and is arranged to share the same center O with the outer edge 134 of the second sub-end cover connecting region 132, the radial width of the second sub-end cover connecting region 132 may remain consistent, which can improve the structural uniformity of the current collecting component 10. In particular, when the second sub-end cover connecting region 132 surrounds the tab connecting region 110 and is arranged at an interval from the tab connecting region 110, radial gaps from the inner edge 135 of the second sub-end cover connecting region 132 to the outer edges 111 of the tab connecting region 110 may be equal, which further improves the structural uniformity of the current collecting component 10.

Alternatively, a ratio between the radiuses of the outer edge 134 of the second sub-end cover connecting region 132 and the radius of the inner edge 135 of the second sub-end cover connecting region 132 may be 1.15, 1.2, or 1.25.

According to some embodiments of the present application, as shown in FIG. 9, optionally, when the current collecting component 10 is in the flat state, the outer edge 133 of the first sub-end cover connecting region 131 and the outer edge 121 of the transition region 120 are respectively arranged in arc shapes and are arranged to share the same center O. Through the above method, the processing difficulty of the current collecting component 10 may be reduced, and the processing and shaping of the current collecting component 10 may be more convenient.

Furthermore, the outer edge 121 of the transition region 120 and the outer edge 111 of the tab connecting region 110 share the same center O. In some embodiments, the corresponding radii of the outer edge 121 of the transition region 120 and the outer edge 111 of the tab connecting region 110 are equal, and therefore may be connected to form an arc.

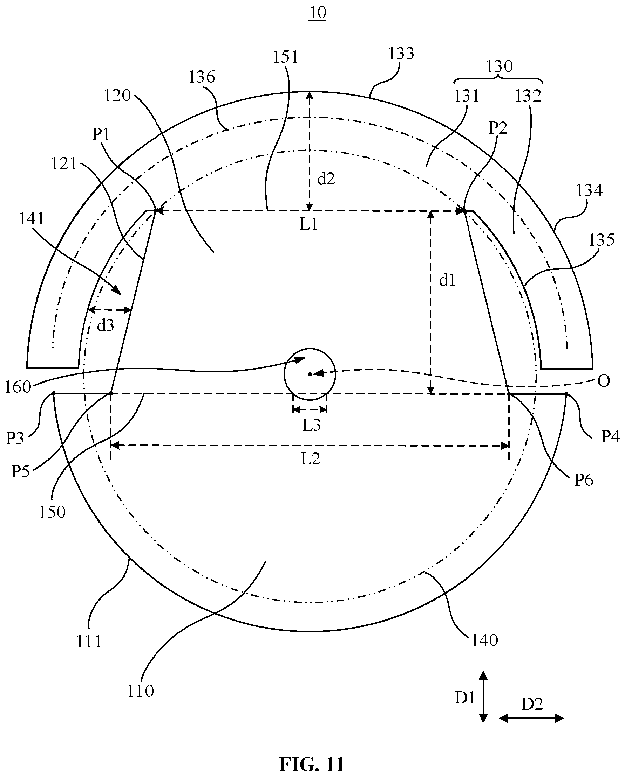

According to some embodiments of the present application, as shown in FIG. 11, optionally, in the flat state of the current collecting component 10, the outer edge 111 of the tab connecting region 110 is arranged in an arc shape, and the current collecting component 10 further has a reference circle 140 that takes a connection line from the outermost connection point P1 or P2 of the first sub-end cover connecting region 131 and the transition region 120 in the second reference direction D2 to the center O of the outer edge 111 of the tab connecting region 110 as its radius. The outer edge 121 of the transition region 120 is located inside the reference circle 140 and is arranged at an interval from the reference circle 140. Through the above method, sufficient hollow space is formed between the transition region 120 and the second sub-end cover connecting region 132, thereby reducing the amount of material used in the current collecting component 10 and improving the infiltration effect of the electrolyte solution on the electrode assembly 20.

Optionally, one end of the outer edge 121 of the transition region 120 is located on the circumference of the reference circle 140, and the other end of the outer edge 121 of the transition region 120 is located within the circumference of the reference circle 140, such that the outer edge 121 of the transition region 120 is arranged at an interval from the reference circle 140.

According to some embodiments of the present application, optionally, the interval width d3 between the outer edge 121 of the transition region 120 and the reference circle 140 in the second reference direction D2 gradually becomes larger in a direction from the first sub-end cover connecting region 131 to the tab connecting region 110.

Specifically, the closer the outer edge 121 of the transition region 120 is to the first sub-end cover connecting region 131, the smaller the interval width d3 from the reference circle 140 in the second reference direction D2 is, and the closer the outer edge 121 of the transition region 120 is to the tab connecting region 110, the larger the interval width d3 from the reference circle 140 in the second reference direction D2 is. Through the above method, sufficient hollow space is formed between the transition region 120 and the second sub-end cover connecting region 132, thereby reducing the amount of material used in the current collecting component 10 and improving the infiltration effect of the electrolyte solution on the electrode assembly 20.

According to some embodiments of the present application, optionally, the transition region 120 is arranged in a trapezoidal shape, and the width of the transition region 120 in the second reference direction D2 gradually becomes larger in the direction from the first sub-end cover connecting region 131 to the tab connecting region 110.

Specifically, at a junction of the transition region 120 and the tab connecting region 110, the width of the transition region 120 in the second reference direction D2 is the largest. At a junction of the transition region 120 and the first sub-end cover connecting region 131, the width of the transition region 120 in the second reference direction D2 is the smallest. Through the above method, sufficient hollow space is formed between the transition region 120 and the second sub-end cover connecting region 132, thereby reducing the amount of material used in the current collecting component 10 and improving the infiltration effect of the electrolyte solution on the electrode assembly 20. Moreover, the transition region 120 is arranged in a trapezoidal shape, which is more conducive to processing and shaping of the current collecting component 10.

It is worth noting that when the included angle θ is smaller than the central angle α, the above arrangement may form sufficient hollow space while ensuring the overcurrent requirements of the transition region 120.

According to some embodiments of the present application, as shown in FIG. 9 and FIG. 11, optionally, in the flat state of the current collecting component 10, when the outer edge 111 of the tab connecting region 110 is projected toward the end cover connecting region 130 in the first reference direction D1, the projection of the outermost points P3 and P4 of the outer edge 111 of the tab connecting region 110 in the second reference direction D2 is located outside the inner edge 135 of the second sub-end cover connecting region 132. Through the above method, the regional area of the tab connecting region 110 that is capable of being connected to the first tab 21 may be ensured, thereby meeting the overcurrent requirements.

According to some embodiments of the present application, optionally, the outer edge 111 of the tab connecting region 110 and the inner edge 135 of the second sub-end cover connecting region 132 are respectively arranged in arc shapes and share the same center O, and the radius of the outer edge 111 of the tab connecting region 110 is larger than the radius of the inner edge 135 of the second sub-end cover connecting region 132.

Through the above method, the regional area of the tab connecting region 110 that is capable of being connected to the first tab 21 can be ensured, which facilitates the processing and shaping of the current collecting component 10 at the same time. Further, it is easier to adapt to a cylindrical or nearly cylindrical battery cell 1.

According to some embodiments of the present application, optionally, the current collecting component 10 is provided with a first trace line 150 and a second trace line 151 in the second reference direction D2. The first trace line 150 is arranged to allow the tab connecting region 110 to be bent relative to the transition region 120 along the first trace line 150. The second trace line 151 is arranged to allow the first sub-end cover connecting region 131 to be bent relative to the transition region 120 along the second trace line 151. Through the above method, it is easy to bend the current collecting component 10. According to some embodiments of the present application, as shown in FIG. 9 to FIG. 11, optionally, in the flat state, there is a first distance d1 between the first trace line 150 and the second trace line 151 in the first reference direction D1, and there is a second distance d2 from the second trace line 151 to the outer edge 133 of the first sub-end cover connecting region 131 in the first reference direction D1. The first distance d1 is greater than a maximum value of the second distance d2, so that in a bent state, the outer edge 34 of the end cover assembly 30 maintains a predetermined interval from a plane where the first main surface 173 of the tab connecting region 110 is located. Through the above method, the bending of the current collecting component 10 is facilitated, and at the same time, interference between the end cover assembly 30 and the electrode assembly 20 is avoided, which facilitates the welding operation.

Both sides of the current collecting component 10 are connected to the first tab 21 and the end cover assembly 30 respectively, and the first tab 21 is generally arranged on an end surface of the electrode assembly 20; therefore, in order to achieve the welding method as shown in FIG. 8, the current collecting component 10 needs to be bent at least twice. By setting the first distance d1 to be greater than a maximum value of the second distance d2, the end cover assembly 30 may be sufficiently far away from the tab connecting region 110 while avoiding forming interference with the end surface of the electrode assembly 20, which is convenient for welding operations.

Optionally, the end cover connecting region 130 is perpendicular to the tab connecting region 110 after being bent, and the outer edge 34 of the end cover assembly 30 maintains a predetermined interval from a plane where the tab connecting region 110 is located, which can prevent the end cover assembly 30 from interfering with the end face of the electrode assembly 20.

Specifically, in FIG. 8, the tab connecting region 110 and the transition region 120 are arranged at an obtuse angle, and the transition region 120 and the end cover connecting region 130 are arranged at an acute angle. At this time, projections of the end cover connecting region 130 and the end cover assembly 30 connected thereto in the vertical direction of the tab connecting region 110 fall outside the tab connecting region 110, which can effectively avoid blocking the tab connecting region 110. According to some embodiments of the present application, optionally, a ratio between the minimum overcurrent area S of the transition region 120 and the battery capacity C of the battery cell 1 is greater than or equal to 0.15 mm2/Ah, and the minimum overcurrent area of the transition region 120 is a product of the minimum width of the transition region 120 in the second reference direction D2 and the thickness of the transition region 120. For example, S/C may be 0.18 mm2/Ah, 0.20 mm2/Ah, or 0.25 mm2/Ah. Through the above method, the overcurrent capacity of the transition region 120 may be made to meet current transmission requirements of the electrode assembly 20 and the end cover assembly 30.

According to some embodiments of the present application, optionally, the electrode assembly 20 includes an electrode main body arranged in a cylindrical shape, the outer edge 111 of the tab connecting region 110 is arranged in an arc shape, and a ratio of the radius of the outer edge 111 of the tab connecting region 110 to the radius of the electrode assembly 20 is greater than or equal to 0.8.

For example, the ratio of the radius of the outer edge 111 of the tab connecting region 110 to the radius of the electrode assembly 20 may be 0.8 to 0.85 or 0.85 to 0.9. Furthermore, the ratio of the radius of the outer edge 111 of the tab connecting region 110 to the radius of the electrode assembly 20 is greater than or equal to 0.9. Through the above method, the regional area of the tab connecting region 110 that is capable of being connected to the first tab 21 may be ensured, thereby meeting the overcurrent requirements.

According to some embodiments of the present application, optionally, as shown in FIG. 11, the current collecting component 10 is further provided with a hollow portion 160. Through the above method, arranging the hollow portion 160 may reduce the amount of material used in the current collecting component 10 and improve the infiltration effect of the electrolyte solution in the electrode assembly 20.

According to some embodiments of the present application, optionally, the outer edge 111 of the tab connecting region 110 is arranged in an arc shape and the hollow portion 160 is located at the center O of the outer edge 111 of the tab connecting region 110, or the hollow portion 160 is entirely located within the tab connecting region 110.

Through the above method, the hollow portion 160 located at the position of the center O can further enhance the infiltration effect of the electrolyte solution on the electrode assembly 20. When the hollow portion 160 is entirely located in the tab connecting region 110, the hollow portion may be used as an observation window and may be used for assisting positioning. Specifically, the center O is generally aligned with a center hole formed by winding the electrode assembly 20, and therefore, the hollow portion 160 is directly in communication with the center hole, which can further enhance the infiltration effect of the electrolyte solution on the electrode assembly 20. The tab connecting region 110 needs to be attached to the first tab 21, and the hollow portion 160 is located entirely within the tab connecting region 110, so that it is easier to observe the alignment between the electrode assembly 20 and the current collecting component 10.

Further, the actual width of the transition region 120 in the second reference direction D2 is greater than or equal to the width L1 at a connection position between the transition region 120 and the first sub-end cover connecting region 131. At the position of the hollow portion 160, the actual width of the transition region 120 is equal to a result of subtracting the length L3 truncated by the hollow portion 160 from the distance L2 between intersection points P5 and P6 of a reference line parallel to the second reference direction D2 and two side edges of the transition region 120.

According to some embodiments of the present application, optionally, as shown in FIG. 3, FIG. 4, and FIG. 12, the end cover assembly 30 includes an end cover 30a, the electrode lead-out portion 31 includes at least a part of region on the end cover 30a, and the end cover 30a covers an opening 41. In other embodiments, the electrode lead-out portion 31 may be an electrode terminal arranged on the end cover 30a, and the electrode terminal protrudes from the end cover 30a.

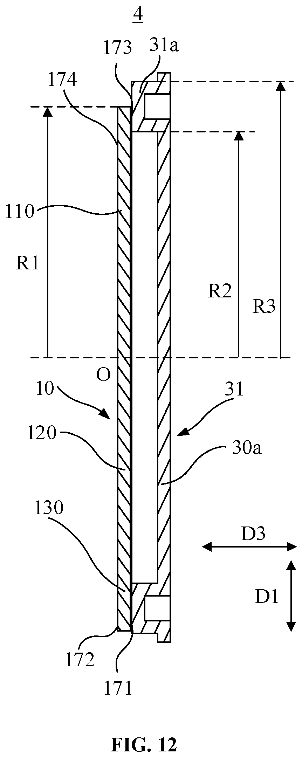

According to some embodiments of the present application, as shown in FIG. 12, optionally, the electrode lead-out portion 31 includes an annular boss 31a of the end cover 30a protruding toward the electrode assembly 20, the end cover connecting region 130 is welded to a top surface of the annular boss 31a, and the outer edge 111 of the tab connecting region 110 overlaps a top surface of the annular boss 31a.

Through the above method, the annular boss 31a is used to support the tab connecting region 110, which can reduce deformation and deflection of the current collecting component 10 and improve the structural stability of the battery cell 1. Specifically, during use of the battery cell 1, if gas, vibration, or another situation occurs inside the battery cell 1, the transition region 120 and the tab connecting region 110 of the current collecting component 10 may easily deform or deflect. The outer edge 111 of the tab connecting region 110 overlaps the annular boss 31a so that the annular boss 31a supports the tab connecting region 110 in a direction perpendicular to the tab connecting region 110, thereby reducing the deformation and deflection of the current collecting component 10.

According to some embodiments of the present application, optionally, the outer edge 111 of the tab connecting region 110 is arranged in an arc shape, and the radius R1 of the outer edge 111 of the tab connecting region 110 is greater than an inner edge radius R2 of the annular boss 31a and smaller than an outer edge radius R3 of the annular boss 31a. Through the above method, while the annular boss 31a is used to support the tab connecting region 110, interference between the outer edge of the tab connecting region 110 and the case 40 is avoided.

According to some embodiments of the present application, optionally, the case 40 is electrically connected to the end cover 30a. As further shown in FIG. 3, the case 40 includes a bottom wall 42 arranged opposite to the end cover 30a. The bottom wall 42 is provided with an electrode terminal 43 protruding from the bottom wall 42. The electrode assembly 20 further includes a second tab 22 having a polarity opposite to that of the first tab 21. The second tab 22 is located on a side of the electrode assembly 20 facing the electrode terminal 43. The second tab 22 is electrically connected to the electrode terminal 43.

Through the above method, the case 40 and the electrode terminal 43 arranged on the bottom wall 42 of the case 40 are used as positive and negative electrodes of the battery cell 1, which can simplify the assembling complexity of the battery cell and facilitate the connection between the battery cell 1 and an external device.

According to some embodiments of the present application, as shown in FIG. 2, a battery 100a described in the embodiments of the present application includes the battery cell 1 described above.

According to some embodiments of the present application, as shown in FIG. 1, an electrical apparatus described in an embodiment of the electrical apparatus of the present application includes the above battery 100a.

According to some embodiments of the present application, as shown in FIG. 8, the present application further provides an assembling assembly 4 that is pre-assembled by the end cover assembly 30 and the current collecting component 10. In the assembling assembly 4, the current collecting component 10 may be arranged to be capable of being bent into the bent state in advance and maintaining the bent state without being affected by an external force, thereby simplifying the subsequent assembling process with the electrode assembly 20. The specific structures of the end cover assembly 30 and the current collecting component 10 have been described in detail above and will not be described again here.

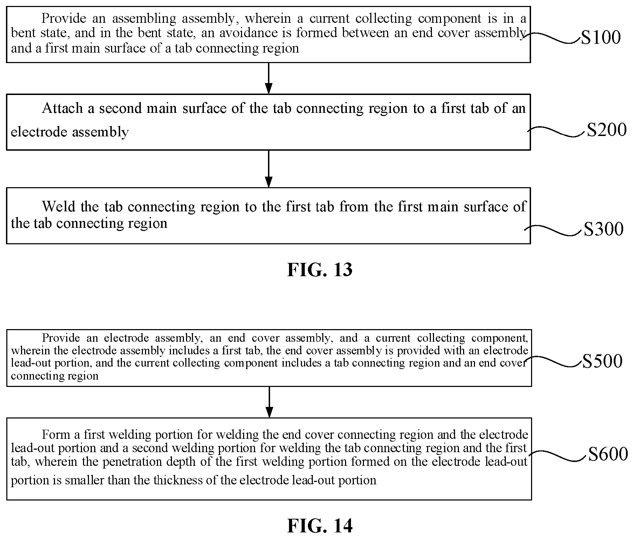

According to some embodiments of the present application, as shown in FIG. 13, an assembling method described in a first embodiment of the assembling method of the battery cell 1 of the present application includes:
S100: The assembling assembly 4 is provided, wherein the current collecting component is in a bent state, and in the bent state, an avoidance is formed between the end cover assembly 30 and the first main surface 173 of the tab connecting region 110.

As shown in FIG. 8, specifically, the avoidance is formed between the end cover assembly 30 and the first main surface 173 of the tab connecting region 110, which is beneficial for the operation of the next step of welding the tab connecting region 110 to the first tab 21 from the first main surface 173 of the tab connecting region 110.

The assembling process of the assembling assembly 4 itself may include:
S110: The first main surface 171 of the end cover connecting region 130 is attached to the end cover assembly 30.
S120: The end cover connecting region 130 is welded to the end cover assembly 30 from the second main surface 172 of the end cover connecting region 130. In this way, the end cover assembly 30 can be prevented from being welded through, and the risk of rusting due to damage to a nickel plating layer on the outer side of the end cover assembly 30 can also be avoided.

Optionally, ultrasonic welding is used for welding, so that welding teeth are located at the current collecting component 10, which may avoid the risk of rusting due to damage to the nickel plating layer of the end cover assembly 30.

Optionally, laser welding is used for welding, so that a weld pool is located at the current collecting component 10, which may avoid the risk of rusting due to damage to the nickel plating layer of the end cover assembly 30.

S130: The current collecting component 10 is bent so that the end cover assembly 30 and the tab connecting region 110 are capable of forming an avoidance. The bending process of the current collecting component 10 may be performed before the current collecting component 10 and the end cover 30a are welded, or after the current collecting component 10 and the end cover 30a are welded.

S200: The second main surface 174 of the tab connecting region 110 is attached to the first tab 21 of the electrode assembly 20.

In this way, the positional relationship between the tab connecting region 110 and the electrode assembly 20 may be determined before welding, which facilitates the execution of the welding operation.

S300: The tab connecting region 110 is welded to the first tab from the first main surface 173 of the tab connecting region 110.

The welding of the current collecting component 10 and the end cover assembly 30 from the side of the current collecting component 10 can avoid the risk of false welding and welding penetration caused by welding the current collecting component 10 and the end cover assembly 30 from the outer side of the end cover assembly 30 in the conventional assembling method, which is conducive to reducing the defective rate of battery cells 1 in the production process and improving the quality of battery cells 1.

Optionally, ultrasonic welding is used to weld the tab connecting region 110 to the first tab 21 of the electrode assembly 20 from the side of the first main surface 173 of the tab connecting region 110.

Optionally, laser welding is used to weld the tab connecting region 110 to the first tab 21 of the electrode assembly 20 from the side of the first main surface 173 of the tab connecting region 110.

According to some embodiments of the present application, optionally, the assembling method further includes:
S400: The end cover assembly 30 is placed to cover the opening 41 of the case 40 accommodating the electrode assembly 20, such that the current collecting component 10 is arranged between the electrode assembly 20 and the end cover assembly 30 and is unfolded into an unfolded state. In the unfolded state, the tab connecting region 110, the transition region 120, and the end cover connecting region 130 are arranged in a non-overlapping manner in an axial direction D3 of the battery cell 1.

The end cover assembly 30 covers the opening 41 of the case 40 accommodating the electrode assembly 20 to prevent the electrolyte solution from flowing out. The end cover assembly 30 is synchronized with the covering process of the current collecting component 10. When the covering process of the end cover assembly 30 is completed, the current collecting component 10 is capable of being unfolded into the unfolded state. Such an arrangement is beneficial to improving the usage efficiency of the assembling assembly 4.

According to some embodiments of the present application, as shown in FIG. 14, an assembling method described in another embodiment of the assembling method of the battery cell 1 of the present application includes:
S500: An electrode assembly 20, an end cover assembly 30, and a current collecting component 10 are provided, wherein the electrode assembly 20 includes a first tab 21, the end cover assembly 30 is provided with an electrode lead-out portion 31, and the current collecting component 10 includes a tab connecting region 110 and an end cover connecting region 130.
S600: A first welded portion 32 for welding the end cover connecting region 130 and the electrode lead-out portion 31 and a second welded portion 33 for welding the tab connecting region 110 and the first tab 21 are formed, wherein the penetration depth of the first welded portion 32 formed on the electrode lead-out portion 31 is smaller than the thickness of the electrode lead-out portion 31.

The electrode assembly 20, the current collecting component 10, and the end cover assembly 30 are connected together through the first welded portion 32 and the second welded portion 33. The first welded portion 32 penetrates the end cover connecting region 130 but does not penetrate the electrode lead-out portion 31 to avoid liquid leakage. The second welded portion 33 may penetrate the tab connecting region 110.

According to some embodiments of the present application, optionally, the step of forming the first welded portion 32 for welding the end cover connecting region 130 and the electrode lead-out portion 31 and the second welded portion 33 for welding the tab connecting region 110 and the first tab 21 includes:
S700: The current collecting component 10 is bent into a bent state, so that after one of the first welded portion 32 and the second welded portion 33 is formed, an avoidance is formed between the end cover assembly 30 and the electrode assembly 20, thereby allowing formation of the other of the first welded portion 32 and the second welded portion 33.

The current collecting component 10 may be bent when both the first welded portion 32 and the second welded portion 33 are formed, or the current collecting component 10 may be bent after one of the first welded portion 32 and the second welded portion 33 is formed. For example, the tab connecting region 110 and the first tab 21 may be welded first to form the second welded portion 33, and then the current collecting component 10 may be bent.

Such an arrangement makes it easier to perform welding operations and reduces the risk of liquid leakage.

The welding of the current collecting component 10 and the end cover assembly 30 from the side of the current collecting component 10 can avoid the risk of false welding and welding penetration caused by welding the current collecting component 10 and the end cover assembly 30 from the outer side of the end cover assembly 30 in the conventional assembling method, which is conducive to reducing the defective rate of battery cells 1 in the production process and improving the quality of battery cells 1.

Optionally, the first welded portion 32 is formed from a side of the end cover connecting region 130 away from the electrode lead-out portion 31, and the second welded portion 33 is formed from a side of the tab connecting region 110 away from the first tab 21. Through the above method, the execution of the welding operation may be facilitated.

Optionally, the step of forming the first welded portion 32 for welding the end cover connecting region 130 and the electrode lead-out portion 31 and the second welded portion 33 for welding the tab connecting region 110 and the first tab 21 further includes:
S710: After the first welded portion 32 and the second welded portion 33 are formed, the end cover assembly 30 is placed to cover the opening 41 of the case 40 accommodating the electrode assembly 20, and the current collecting component 10 is unfolded at the same time, so that the end cover assembly 30 covers the current collecting component 10 and the electrode assembly 20.

In conclusion, the embodiment of the present application can implement welding of the current collecting component 10 and the end cover assembly 30 from the side of the current collecting component 10 and welding of the current collecting component 10 and the first tab 21 from the side of the current collecting component 10, and the risk of false welding and welding penetration caused by welding the end cover assembly 30 from the side of the end cover assembly 30 in the conventional assembling method can be avoided, which is conducive to reducing the defective rate of battery cells 1 in the production process and improving the quality of battery cells 1.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
an electrode assembly comprising a first tab;
a case used for accommodating the electrode assembly, the case having an opening;
an end cover assembly covering the opening and provided with an electrode lead-out portion; and
a current collecting component comprising a tab connecting region and an end cover connecting region, wherein the tab connecting region is used for connecting to the first tab, the end cover connecting region is welded to an inner side of the electrode lead-out portion and forms a first welded portion, and a penetration depth of the first welded portion formed on the electrode lead-out portion is smaller than or equal to a thickness of the electrode lead-out portion.

2. The battery cell according to claim 1, wherein the penetration depth of the first welded portion formed on the electrode lead-out portion is between 1/4 and 3/4 of the thickness of the electrode lead-out portion.

3. The battery cell according to claim 1 or 2, wherein a base material of the electrode lead-out portion is different from a base material of the current collecting component, and/or the melting point of the base material of the electrode lead-out portion is greater than the melting point of the base material of the current collecting component.

4. The battery cell according to any one of claims 1 to 3, wherein the thermal expansion coefficient of a base material of the electrode lead-out portion is smaller than the thermal expansion coefficient of a base material of the current collecting component.

5. The battery cell according to any one of claims 1 to 4, wherein a base material of the electrode lead-out portion is steel, and a base material of the current collecting component is copper or aluminum.

6. The battery cell according to any one of claims 1 to 5, wherein a welding aid layer is arranged on a surface of the electrode lead-out portion and/or the current collecting component.

7. The battery cell according to claim 6, wherein the electrode lead-out portion comprises a base, the welding aid layer is arranged on the base, and at least part of the first welded portion is located in the base.

8. The battery cell according to claim 7, wherein the first welded portion is configured not to penetrate the base.

9. The battery cell according to any one of claims 6 to 8, wherein the welding aid layer comprises at least one of nickel or tin.

10. The battery cell according to any one of claims 1 to 9, wherein the first welded portion is formed from a side of the end cover connecting region away from the electrode lead-out portion and extends into the electrode lead-out portion.

11. The battery cell according to any one of claims 1 to 10, wherein the tab connecting region is welded to the first tab and forms a second welded portion, and the second welded portion is formed from a side of the tab connecting region away from the first tab and extends into the first tab.

12. The battery cell according to any one of claims 1 to **11,** wherein the current collecting component further comprises a transition region connected between the tab connecting region and the end cover connecting region;
wherein the transition region is configured to be capable of being bent relative to the end cover connecting region, and the tab connecting region is configured to be capable of being bent relative to the transition region.

13. The battery cell according to claim 12, wherein the current collecting component in a flat state has a first reference direction and a second reference direction arranged along a main surface of the current collecting component and perpendicular to each other, the tab connecting region, the transition region, and the end cover connecting region are arranged sequentially in the first reference direction, and a first main surface of the end cover connecting region is attached to the electrode lead-out portion, and is welded to the electrode lead-out portion through the first welded portion formed from a second main surface of the end cover connecting region.

14. The battery cell according to claim 13, wherein a second main surface of the tab connecting region is attached to the first tab, and is welded to the first tab through a second welded portion formed from a first main surface of the tab connecting region, wherein the first main surface of the tab connecting region and the first main surface of the end cover connecting region are located on a same side of the current collecting component.

15. The battery cell according to any one of claims 12 to 14, wherein after the battery cell is assembled, the current collecting component is in an unfolded state between the electrode assembly and the end cover assembly, and in the unfolded state, the tab connecting region, the transition region, and the end cover connecting region are arranged in a non-overlapping manner in an axial direction of the battery cell.

16. The battery cell according to any one of claims 1 to 15, wherein the tab connecting region is welded to the first tab and forms a second welded portion, and the current collecting component is configured to be capable of being in a bent state in an assembling process of the battery cell, such that, after one of the first welded portion and the second welded portion is formed, an avoidance is formed between the end cover assembly and the electrode assembly, thereby allowing formation of the other of the first welded portion and the second welded portion.

17. The battery cell according to claim 16, wherein in the bent state, an avoidance is formed between the end cover assembly and a first main surface of the tab connecting region.

18. The battery cell according to any one of claims 1 to 17, wherein the end cover connecting region comprises a first sub-end cover connecting region and a second sub-end cover connecting region, the first sub-end cover connecting region is connected to the tab connecting region, the second sub-end cover connecting region is connected to the first sub-end cover connecting region and is arranged to maintain a gap with the tab connecting region, and the first sub-end cover connecting region and the second sub-end cover connecting region are respectively welded to the electrode lead-out portion through the first welded portion.

19. The battery cell according to claim 18, wherein the current collecting component further comprises a transition region arranged between the first sub-end cover connecting region and the tab connecting region, the current collecting component in a flat state has a first reference direction and a second reference direction arranged along a main surface of the current collecting component and perpendicular to each other, the tab connecting region, the transition region, and the first sub-end cover connecting region are arranged sequentially in the first reference direction, the second sub-end cover connecting region is located outside the transition region at least in the second reference direction and extends toward the tab connecting region, and certain gaps are maintained between the second sub-end cover connecting region and the transition region as well as the tab connecting region.

20. The battery cell according to claim 19, wherein the second sub-end cover connecting region further extends to be located outside the tab connecting region in the second reference direction.

21. The battery cell according to claim 20, wherein there is one second sub-end cover connecting region, and two ends of the second sub-end cover connecting region are respectively connected to the first sub-end cover connecting region, and are arranged around the transition region and the tab connecting region.

22. The battery cell according to claim 19 or 20, wherein there are two second sub-end cover connecting regions, and they are respectively located at least on two opposite sides of the transition region in the second reference direction.

23. The battery cell according to any one of claims 18 to 22, wherein the tab connecting region and the first sub-end cover connecting region are respectively arranged in arch shapes.

24. The battery cell according to claim 23, wherein in the flat state of the current collecting component, an outer edge of the tab connecting region and an outer edge of the first sub-end cover connecting region are respectively arranged in arc shapes and are arranged to share a common center.

25. The battery cell according to any one of claims 19 to 24, wherein in the flat state of the current collecting component, the outer edge of the tab connecting region is arranged in an arc shape, there is an included angle between connection lines from two outermost connection points of the first sub-end cover connecting region and the transition region in the second reference direction to the center of the outer edge of the tab connecting region, and the included angle is smaller than a central angle of the outer edge of the tab connecting region.

26. The battery cell according to claim 25, wherein the central angle of the outer edge of the tab connecting region is 120 degrees to 240 degrees, and the included angle is 80 degrees to 120 degrees.

27. The battery cell according to any one of claims 18 to 26, wherein in the flat state of the current collecting component, the outer edge of the first sub-end cover connecting region and an outer edge of the second sub-end cover connecting region are respectively arranged in arc shapes and are arranged to share a common center with equal radiuses.

28. The battery cell according to any one of claims 18 to 27, wherein in the flat state of the current collecting component, the outer edge of the second sub-end cover connecting region and an inner edge of the second sub-end cover connecting region are arranged in arc shapes and are arranged to share a common center, and a ratio between the radiuses of the outer edge of the second sub-end cover connecting region and the inner edge of the second sub-end cover connecting region is from **1.1** to 1.3.

29. The battery cell according to any one of claims 19 to 28, wherein in the flat state of the current collecting component, the outer edge of the first sub-end cover connecting region and the outer edge of the transition region are respectively arranged in arc shapes and are arranged to share a common center.

30. The battery cell according to any one of claims 19 to 28, wherein in the flat state of the current collecting component, the outer edge of the tab connecting region is arranged in an arc shape, and the current collecting component further has a reference circle having a radius being a connection line from the outermost connection point between the first sub-end cover connecting region and the transition region in the second reference direction to the center of the outer edge of the tab connecting region, and the outer edge of the transition region is located inside the reference circle and is arranged at an interval from the reference circle.

31. The battery cell according to claim 30, wherein the interval width between the outer edge of the transition region and the reference circle in the second reference direction gradually increases in a direction from the first sub-end cover connecting region to the tab connecting region.

32. The battery cell according to claim 30 or 31, wherein the transition region is arranged in a trapezoidal shape, and the width of the transition region in the second reference direction gradually increases in the direction from the first sub-end cover connecting region to the tab connecting region.

33. The battery cell according to any one of claims 18 to 32, wherein in the flat state of the current collecting component, when the outer edge of the tab connecting region is projected toward the end cover connecting region in the first reference direction, the projection of the outermost point of the outer edge of the tab connecting region in the second reference direction is located outside the inner edge of the second sub-end cover connecting region.

34. The battery cell according to claim 33, wherein the outer edge of the tab connecting region and the inner edge of the second sub-end cover connecting region are respectively arranged in arc shapes and share a common center, and the radius of the outer edge of the tab connecting region is larger than the radius of the inner edge of the second sub-end cover connecting region.

35. The battery cell according to any one of claims 19 to 34, wherein the current collecting component is provided with a first trace line and a second trace line in the second reference direction, the first trace line is configured to allow the tab connecting region to be bent relative to the transition region along the first trace line, and the second trace line is configured to allow the first sub-end cover connecting region to be bent relative to the transition region along the second trace line.

36. The battery cell according to claim 35, wherein in the flat state, there is a first distance between the first trace line and the second trace line in the first reference direction, there is a second distance from the second trace line to the outer edge of the first sub-end cover connecting region in the first reference direction, and the first distance is greater than a maximum value of the second distance, so that in the bent state, the outer edge of the end cover assembly maintains a predetermined interval from a plane where a first main surface of the tab connecting region is located.

37. The battery cell according to any one of claims 19 to 36, wherein a ratio between a minimum overcurrent area S of the transition region and the battery capacity C of the battery cell is greater than or equal to 0.15 mm2/Ah, and the minimum overcurrent area of the transition region is a product of the minimum width of the transition region in the second reference direction and the thickness of the transition region.

38. The battery cell according to any one of claims 1 to 37, wherein the electrode assembly comprises an electrode main body arranged in a cylindrical shape, the outer edge of the tab connecting region is arranged in an arc shape, and a ratio of the radius of the outer edge of the tab connecting region to the radius of the electrode assembly is greater than or equal to 0.8.

39. The battery cell according to any one of claims 1 to 38, wherein the current collecting component is further provided with a hollow portion.

40. The battery cell according to claim 39, wherein the outer edge of the tab connecting region is arranged in an arc shape and the hollow portion is located at the position of the center of the outer edge of the tab connecting region, or the hollow portion is entirely located within the tab connecting region.

41. The battery cell according to any one of claims 1 to 40, wherein the end cover assembly comprises an end cover, the electrode lead-out portion comprises at least a part of region on the end cover, and the end cover covers the opening.

42. The battery cell according to claim 41, wherein the electrode lead-out portion comprises an annular boss of the end cover protruding toward the electrode assembly, the end cover connecting region is welded to a top surface of the annular boss, and the outer edge of the tab connecting region overlaps the top surface of the annular boss.

43. The battery cell according to claim 42, wherein the outer edge of the tab connecting region is arranged in an arc shape, and the radius of the outer edge of the tab connecting region is greater than an inner edge radius of the annular boss and smaller than an outer edge radius of the annular boss.

44. The battery cell according to any one of claims 1 to 40, wherein the case is electrically connected to the end cover, the case comprises a bottom wall arranged opposite to the end cover, and the bottom wall is provided with an electrode terminal protruding from the bottom wall; and
the electrode assembly further comprises a second tab with a polarity opposite to that of the first tab, the second tab is located on a side of the electrode assembly facing the electrode terminal, and the second tab is electrically connected to the electrode terminal.

45. A battery, comprising the battery cell according to any one of claims 1 to 44.

46. An electrical apparatus, wherein the electrical apparatus comprises the battery according to claim 45.

47. An assembling assembly applicable to a battery cell, wherein the assembling assembly comprises:
an end cover assembly, wherein the end cover assembly is provided with an electrode lead-out portion; and
a current collecting component, wherein the current collecting component in a flat state has a first reference direction and a second reference direction arranged along a main surface of the current collecting component and perpendicular to each other, the current collecting component comprises a tab connecting region, a transition region, and an end cover connecting region arranged sequentially in the first reference direction, a first main surface of the end cover connecting region is attached to the electrode lead-out portion, and is welded to the battery lead-out portion through a first welded portion formed from a second main surface of the end cover connecting region, and the penetration depth of the first welded portion formed on the electrode lead-out portion is smaller than or equal to the thickness of the electrode lead-out portion.

48. The assembling assembly according to claim 47, wherein the transition region is configured to be capable of being bent relative to the end cover connecting region, and the tab connecting region is configured to be capable of being bent relative to the transition region, so that the current collecting component is in a bent state, and in the bent state, an avoidance is formed between the end cover and a first main surface of the tab connecting region such that when a second main surface of the tab connecting region is attached to a first tab of the electrode assembly, the tab connecting region is allowed to be welded to the first tab through a second welded portion formed from the first main surface of the tab connecting region, wherein the first main surface of the tab connecting region and the first main surface of the end cover connecting region are located on a same side of the current collecting component.

49. The assembling assembly according to claim 48, wherein the current collecting component is configured to be capable of being bent into a bent state in advance and maintaining the bent state without being affected by an external force.

50. The assembling assembly according to any one of claims 47 to 49, wherein the current collecting component is configured to be capable of being unfolded into an unfolded state when the tab connecting region is welded to the first tab and the end cover assembly is placed to cover a case accommodating the electrode assembly, wherein in the unfolded state, the tab connecting region, the transition region, and the end cover connecting region are arranged in a non-overlapping manner in an axial direction of the battery cell.

51. The assembling assembly according to any one of claims 47 to 50, wherein the end cover connecting region comprises a first sub-end cover connecting region connected to the transition region and a second sub-end cover connecting region connected to the first sub-end cover connecting region, in the flat state, the second sub-end cover connecting region is located at least outside the transition region in the second reference direction, and extends toward the tab connecting region, certain gaps are maintained between the second sub-end cover connecting region and the transition region as well as the tab connecting region, and the first sub-end cover connecting region and the second sub-end cover connecting region are respectively welded to the electrode lead-out portion through the first welded portion.

52. The assembling assembly according to claim 51, wherein the second sub-end cover connecting region further extends to be located outside the tab connecting region in the second reference direction.

53. The assembling assembly according to claim 51 or 52, wherein there is one second sub-end cover connecting region, two ends of the second sub-end cover connecting region are respectively connected to the first sub-end cover connecting region, and are arranged around the transition region and the tab connecting region, or there are two second sub-end cover connecting regions, and they are respectively located at least on two opposite sides of the transition region in the second reference direction.

54. The assembling assembly according to any one of claims 51 to 53, wherein in the flat state, the tab connecting region and the first sub-end cover connecting region are respectively arranged in arch shapes, and an outer edge of the tab connecting region and an outer edge of the first sub-end cover connecting region are respectively arranged in arc shapes and are arranged to share a common center.

55. The assembling assembly according to any one of claims 51 to 54, wherein in the flat state, the outer edge of the tab connecting region is arranged in an arc shape, there is an included angle between connection lines from two outermost connection points of the first sub-end cover connecting region and the transition region in the second reference direction to the center of the outer edge of the tab connecting region, and the included angle is smaller than a central angle of the outer edge of the tab connecting region.

56. The assembling assembly according to any one of claims 51 to 55, wherein in the flat state, the outer edge of the first sub-end cover connecting region and an outer edge of the second sub-end cover connecting region are respectively arranged in arc shapes and are arranged to share a common center with equal radiuses, and an inner edge of the second sub-end cover connecting region is arranged in an arc shape, and is arranged to share a common center with the outer edge of the first sub-end cover connecting region.

57. The assembling assembly according to any one of claims 51 to 56, wherein in the flat state, the outer edge of the tab connecting region is arranged in an arc shape, and the current collecting component further has a reference circle having a radius being a connection line from the outermost connection point between the first sub-end cover connecting region and the transition region in the second reference direction to the center of the outer edge of the tab connecting region, and the outer edge of the transition region is located inside the reference circle and is arranged at an interval from the reference circle.

58. The assembling assembly according to claim 57, wherein the interval width between the outer edge of the transition region and the reference circle in the second reference direction gradually increases in a direction from the first sub-end cover connecting region to the tab connecting region, and/or the transition region is arranged in a trapezoidal shape, and the width of the transition region in the second reference direction gradually increases in the direction from the first sub-end cover connecting region to the tab connecting region.

59. The assembling assembly according to any one of claims 51 to 58, wherein in the flat state, when the outer edge of the tab connecting region is projected toward the end cover connecting region in the first reference direction, the projection of the outermost point of the outer edge of the tab connecting region in the second reference direction is located outside the inner edge of the second sub-end cover connecting region.

60. The assembling assembly according to claim 59, wherein the outer edge of the tab connecting region and the inner edge of the second sub-end cover connecting region are respectively arranged in arc shapes and share a common center, and the radius of the outer edge of the tab connecting region is larger than the radius of the inner edge of the second sub-end cover connecting region.

61. The assembling assembly according to any one of claims 51 to 60, wherein the current collecting component is provided with a first trace line and a second trace line in the second reference direction, the first trace line is configured to allow the tab connecting region to be bent relative to the transition region along the first trace line, the second trace line is configured to allow the first sub-end cover connecting region to be bent relative to the transition region along the second trace line, in the flat state, there is a first distance between the first trace line and the second trace line in the first reference direction, there is a second distance from the second trace line to the outer edge of the first sub-end cover connecting region in the first reference direction, and the first distance is greater than a maximum value of the second distance, so that in the bent state, the outer edge of the end cover maintains a predetermined interval from a plane where the first main surface of the tab connecting region is located.

62. The assembling assembly according to any one of claims 47 to 61, wherein the current collecting component is further provided with a hollow portion.

63. The assembling assembly according to claim 62, wherein the outer edge of the tab connecting region is arranged in an arc shape and the hollow portion is located at the center of the outer edge of the tab connecting region, or the hollow portion is entirely located within the tab connecting region.

64. The assembling assembly according to any one of claims 47 to 63, wherein the end cover assembly comprises an end cover, the end cover covers an opening of the case, the electrode lead-out portion comprises an annular boss of the end cover protruding toward the electrode assembly, the end cover connecting region is welded to a top surface of the annular boss, and the outer edge of the tab connecting region after welding overlaps the top surface of the annular boss.

65. An assembling method of a battery cell, wherein the assembling method comprises:
providing the assembling assembly according to any one of claims 47 to 64, wherein the current collecting component is in a bent state, and in the bent state, an avoidance is formed between the end cover assembly and the first main surface of the tab connecting region;
attaching the second main surface of the tab connecting region to the first tab of the electrode assembly; and
welding the tab connecting region to the first tab from the first main surface of the tab connecting region.

66. The assembling method according to claim 65, wherein the assembling method further comprises:
covering the opening of the case accommodating the electrode assembly with the end cover assembly, such that the current collecting component is arranged between the electrode assembly and the end cover assembly and is unfolded into an unfolded state, wherein in the unfolded state, the tab connecting region, the transition region, and the end cover connecting region are arranged in a non-overlapping manner in an axial direction of the battery cell.

67. An assembling method of a battery cell, wherein the assembling method comprises:
providing an electrode assembly, an end cover assembly, and a current collecting component, wherein the electrode assembly comprises a first tab, the end cover assembly is provided with an electrode lead-out portion, and the current collecting component comprises a tab connecting region and an end cover connecting region; and
forming a first welded portion for welding the end cover connecting region and the electrode lead-out portion and a second welded portion for welding the tab connecting region and the first tab, wherein the penetration depth of the first welded portion formed on the electrode lead-out portion is smaller than the thickness of the electrode lead-out portion.

68. The assembling method according to claim 67, wherein the step of forming the first welded portion for welding the end cover connecting region and the electrode lead-out portion and the second welded portion for welding the tab connecting region and the first tab comprises:
bending the current collecting component into a bent state, so that after one of the first welded portion and the second welded portion is formed, an avoidance is formed between the end cover assembly and the electrode assembly, thereby allowing formation of the other of the first welded portion and the second welded portion.

69. The assembling method according to claim 67 or 68, wherein the first welded portion is formed from a side of the end cover connecting region away from the electrode lead-out portion, and the second welded portion is formed from a side of the tab connecting region away from the first tab.
